# EUROPEAN PATENT APPLICATION

(11) **EP 3 951 665 A1**
(43) Date of publication of application: **09.02.2022**
(21) Application number: 20784398.8
(22) Date of filing: 24.01.2020
(51) Int. Cl.: G06N 20/00

(54) **INFORMATION PROCESSING SYSTEM AND INFORMATION PROCESSING METHOD**

(30) Priority: 04.04.2019 JP 2019071736
(71) Applicant: Sony Group Corporation, Tokyo 108-0075 (JP)
(72) Inventor: AOKI, Suguru, Tokyo 108-0075 (JP); IWASA, Kazuhito, Tokyo 108-0075 (JP); SHIMIZU, Itaru, Tokyo 108-0075 (JP)
(74) Representative: Witte, Weller & Partner Patentanwälte mbB
(86) International application number: PCT/JP2020/002472
(87) International publication number: WO 2020/202731

(57) **Abstract**

Provided is an information processing system, in which for an algorithm that changes based on accumulation of learning data, a degree of influence derived from specific learning data in the accumulated learning data is adjusted, and relearning is performed based on new learning data obtained after the adjustment.

## Description

### Field

The present disclosure relates to an information processing system and an information processing method.

### Background

In related art, an AI agent system that automatically responds to an input by voice or the like from a user by voice or the like has been proposed. For example, Patent Literature 1 describes a technique in which an AI agent responds by utterance with respect to utterance sentence data from a user.

### Citation List

### Patent Literature

Patent Literature 1: WO 2017/191696 A

### Summary

### Technical Problem

Meanwhile, the response by the AI agent or the like may be output based on an algorithm based on accumulation of learning data. In the future, it is estimated that as a technique regarding the algorithm based on the accumulation of the learning data becomes more familiar to a user, the user wants to correct the accumulated learning data more conveniently. For example, it is assumed that an algorithm generated by learning data accumulated in a certain period is inconvenient for the user. However, the learning data accumulated during the period may include learning data that is not inconvenient for the user. Therefore, when the learning data accumulated during the period is erased, the learning data that is not inconvenient for the user is also erased, and it is considered that a state of the algorithm intended by the user cannot be generated.

Therefore, it is estimated that a technique for correcting the accumulated learning data and relearning the algorithm will be required in the future. However, a technique for correcting learning data itself used for generating an algorithm, including the technique described in Patent Literature 1, has not yet been proposed.

Therefore, in view of the above circumstances, the present disclosure proposes an information processing system and an information processing method capable of realizing a desired state of an algorithm by postcorrecting learning data used for generating an algorithm for the algorithm based on accumulation of already generated learning data.

### Solution to Problem

Moreover, according to the present disclosure, an information processing system is provided, wherein for an algorithm that changes based on accumulation of learning data, a degree of influence derived from specific learning data in the accumulated learning data is adjusted, and relearning is performed based on new learning data obtained after the adjustment.

Moreover, according to another aspect of the present disclosure, an information processing method is provided, wherein for an algorithm that changes based on accumulation of a learning data, a processor adjusts a degree of influence derived from specific learning data in the accumulated learning data and performs relearning based on new learning data obtained after the adjustment.

### Brief Description of Drawings

FIG. 1 is a diagram illustrating an information processing system and a user terminal according to a first embodiment.
FIG. 2 is an example of a schematic configuration of learning history data stored in an information processing apparatus according to the first embodiment.
FIG. 3 is a functional block diagram illustrating a configuration of the information processing apparatus according to the first embodiment.
FIG. 4 is a functional block diagram illustrating an example of a configuration of a storage unit according to the first embodiment.
FIG. 5 is a functional block diagram illustrating a configuration of a processing unit according to the first embodiment.
FIG. 6 is a functional block diagram illustrating a configuration of a generation unit according to the first embodiment.
FIG. 7 is a functional block diagram illustrating a configuration of the user terminal according to the first embodiment.
FIG. 8 is a flowchart illustrating an example of transmission and reception of information between the information processing apparatus and the user terminal according to the first embodiment.
FIG. 9 is a flowchart illustrating an example of the transmission and reception of information between the information processing apparatus and the user terminal according to the first embodiment.
FIG. 10 is a flowchart illustrating an example of the transmission and reception of information between the information processing apparatus and the user terminal according to the first embodiment.
FIG. 11 is a diagram illustrating examples of information recorded in an exchange DB, an update history of a knowledge DB, and an update history of a recommendation DB according to the first embodiment.
FIG. 12 is a diagram illustrating output information generated before and after deletion of information regarding exchange and a processing content based on a change in the output information before and after the deletion.
FIG. 13 is a diagram for explaining that information regarding an output recorded in the exchange DB is corrected.
FIG. 14 is a flowchart illustrating update processing of an exchange DB by an information processing apparatus according to an embodiment of the present disclosure.
FIG. 15 is a functional block diagram illustrating a configuration of an information processing apparatus according to a second embodiment.
FIG. 16 is a functional block diagram illustrating a configuration of a storage unit according to the second embodiment.
FIG. 17 is a diagram illustrating examples of information recorded in an exchange DB, an update history of a knowledge DB, and an update history of a recommendation DB according to the second embodiment.
FIG. 18 is a functional block diagram illustrating a configuration of a processing unit according to the second embodiment.
FIG. 19 is a functional block diagram illustrating a configuration of a generation unit according to the second embodiment.
FIG. 20 is a flowchart illustrating an example of parameter update processing according to the second embodiment.
FIG. 21 is a diagram illustrating an outline of processing that the information processing apparatus according to the second embodiment causes an algorithm to relearn.
FIG. 22 is a flowchart illustrating exchange update processing according to the second embodiment.
FIG. 23 is a diagram illustrating an example of an information processing system including a plurality of devices.
FIG. 24 is a functional block diagram illustrating a configuration of an information processing apparatus.
FIG. 25 is a functional block diagram illustrating a configuration example of a hardware configuration of an information processing apparatus constituting a user terminal or an information processing system according to an embodiment of the present disclosure.

### Description of Embodiments

Hereinafter, preferred embodiments of the present disclosure will be described in detail with reference to the accompanying drawings. Note that, in the present specification and the drawings, components having substantially the same functional configuration are denoted by the same reference numerals, and redundant description is omitted.

Note that the description will be given in the following order.
1. First Embodiment
1.1. Information Processing System
1.2. User Terminal
1.3. Transmission and Reception of Information between Information Processing System and User terminal
1.4. Algorithm Relearning Method
2. Second Embodiment
2.1. Configuration of Information Processing Apparatus 2.2. Processing Example
3. Application Example
4. Modification Example
5. Hardware Configuration Example
6. Supplement

### <1. First Embodiment>

### <<1.1. Information Processing System>>

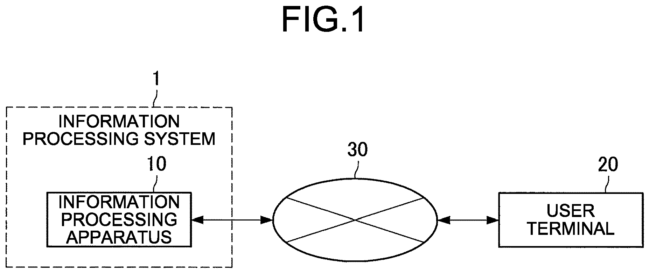

First, an information processing system 1 according to a first embodiment will be described with reference to FIG. 1. As illustrated in FIG. 1, an information processing system 1 according to the first embodiment includes an information processing apparatus 10. Hereinafter, in the first embodiment, it is assumed that the information processing system 1 and the information processing apparatus 10 are the same. The information processing apparatus 10 is connected to a user terminal 20 via a network 30.

The information processing apparatus 10 has a function of generating output information using an algorithm generated based on accumulation of learning data in accordance with input information from a user. Further, the information processing apparatus 10 causes the algorithm to relearn as necessary.

The user terminal 20 has a function of transmitting input information from the user to the information processing apparatus 10 via the network 30 and performing various outputs (for example, output of an image or voice) to the user according to a response from the information processing apparatus 10. In the present embodiment, the user terminal 20 realizes output by an AI agent. Here, the AI agent is a character serving as a motif of a voice or an image output based on an algorithm. The character may be a fictitious character or a real character.

Note that the network 30 may include a public line network such as a telephone line network, the Internet, or a satellite communication network, a local area network (LAN), a wide area network (WAN), or the like. Furthermore, the network 30 may include a dedicated line network such as an Internet protocol-virtual private network (IP-VPN).

The above algorithm is based on learning data accumulated in the information processing apparatus 10. That is, the algorithm is a learning result based on learning data. The information processing apparatus 10 according to the present embodiment stores a learning history of the algorithm.

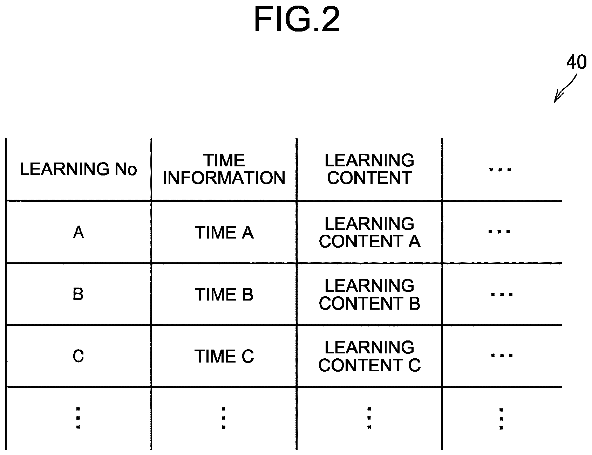

Here, an example of learning history data 40 stored in the information processing apparatus 10 according to the first embodiment will be described with reference to FIG. 2. FIG. 2 is an example of a schematic configuration of the learning history data 40 stored in the information processing apparatus 10 according to the first embodiment. The learning history data 40 illustrated in FIG. 2 is data configured by arranging learning contents of an algorithm in time series. In FIG. 2, learning contents for three times of learning with learning Nos. A to C are arranged in time series.

For example, in the learning of No. A, the content of the learning content A is learned at the time A. Furthermore, in the learning of No. B, the content of the learning content B is learned at the time B. Furthermore, in the learning of No. C, the content of the learning content C is learned at the time C. Note that, at each time, learning of an algorithm is performed based on learning data corresponding to each learning. In the present embodiment, the learning of the algorithm is performed based on the accumulated learning data as described above.

Note that the learning history data 40 illustrated in FIG. 2 has a configuration in which the learning data and the learning content are arranged in time series, but the configuration of the learning history data is not limited thereto. In addition, FIG. 2 illustrates three learning histories of the learning Nos. A to C, but the learning history data may have two or less learning histories or four or more learning histories. Furthermore, in one learning, a plurality of pieces of learning data may be used, or a plurality of pieces of learning may be performed.

Furthermore, the learning data is not particularly limited, but may be based on, for example, data accumulated under a use environment of the algorithm. As a result, the algorithm based on the accumulation of the learning data can be an algorithm according to the use environment of the algorithm by the user. Therefore, the information processing system 1 can more appropriately realize the state of the algorithm desired by the user.

Furthermore, the learning data may include data regarding output information from the algorithm based on input information of the user to the algorithm. As a result, the algorithm is learned according to daily input information from the user and output information based on the input information. The input information and the output information may include information specific to the user. Therefore, the information processing system 1 can more appropriately realize the state of the algorithm desired by the user based on the learning data.

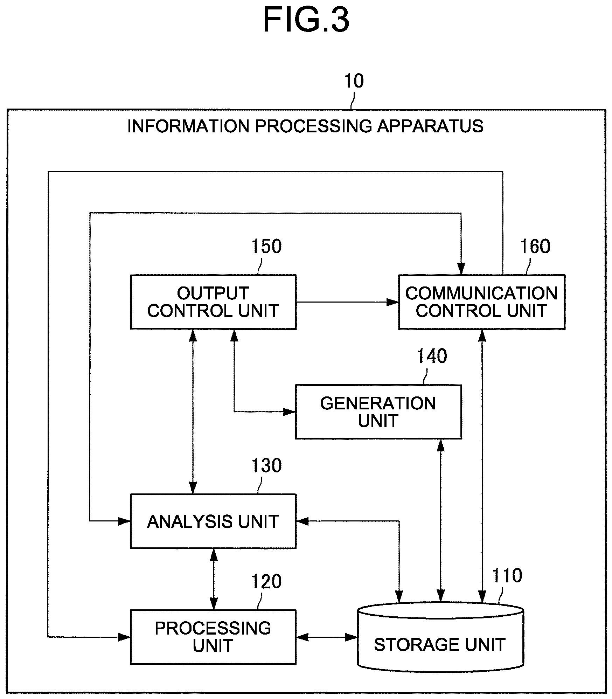

Next, a configuration of the information processing apparatus 10 according to the first embodiment will be described with reference to FIG. 3. FIG. 3 is a functional block diagram illustrating the configuration of the information processing apparatus 10 according to the first embodiment.

The information processing apparatus 10 has a function of adjusting a degree of influence derived from specific learning data in the accumulated learning data with respect to an algorithm that changes based on the accumulation of the learning data, and causing relearning based on new learning data obtained after the adjustment. The functions of the information processing apparatus 10 are realized by cooperation of a storage unit 110, a processing unit 120, an analysis unit 130, a generation unit 140, an output control unit 150, and a communication control unit 160 included in the information processing apparatus 10. Hereinafter, each functional unit included in the information processing apparatus 10 will be described.

The storage unit 110 has a function of storing various types of information. The various types of information stored in the storage unit 110 are referred to by the processing unit 120, the analysis unit 130, the generation unit 140, or the communication control unit 160 as necessary.

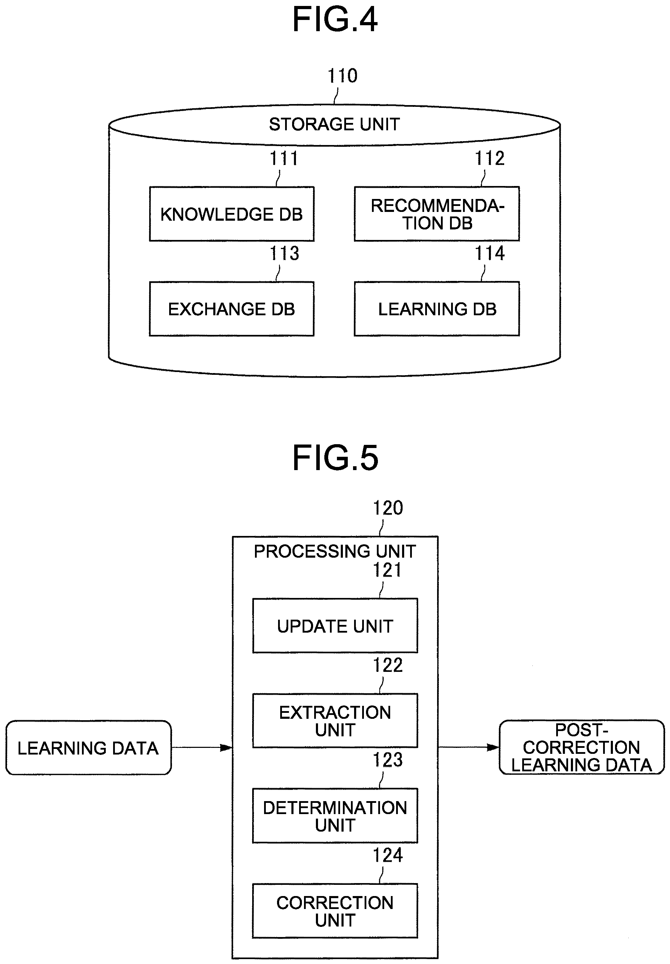

Here, the storage unit 110 according to the present embodiment will be described in more detail with reference to FIG. 4. FIG. 4 is a functional block diagram illustrating an example of a configuration of the storage unit 110 according to the first embodiment. As illustrated in FIG. 4, the storage unit 110 includes a knowledge DB 111, a recommendation DB 112, an exchange DB 113, and a learning DB 114.

In the knowledge DB 111, for example, various types of information used by the analysis unit 130 to analyze input information from the user are recorded. For example, information regarding semantic contents of various words is recorded in the knowledge DB 111. For example, dictionary semantic contents of various words are recorded in the knowledge DB 111. Furthermore, semantic contents of words specific to the user are recorded in the knowledge DB 111. For example, a word "Gunma" generally means Gunma prefecture. However, depending on the user, the word "Gunma" may mean a person's name (for example, the name of a person "Iwasa") In this case, the knowledge DB 111 stores that the word "Gunma" may refer to the name of a person "Iwasa". Alternatively, in the knowledge DB 111, meanings of various words may be stochastically defined. For example, the knowledge DB 111 may record that the word "Gunma" means the name "Iwasa" with a probability of 70%.

Furthermore, the knowledge DB 111 may store user data that is data regarding the user. Note that the user data may be included in learning data for causing the algorithm to learn. As a result, the user can correct the information regarding the user himself/herself included in the learning data. As a result, the information processing apparatus 10 can cause the algorithm to relearn more appropriately, and can more appropriately realize the state of the algorithm desired by the user.

Furthermore, information regarding weather or news may be recorded in the knowledge DB 111. Furthermore, in the knowledge DB 111, for example, information such as a memo or a reminder input by the user may be recorded. Furthermore, information for performing Web extraction or product extraction may be recorded in the knowledge DB 111.

In the recommendation DB 112, various types of data used by a recommendation information generation unit 142 to be described later to generate output information are recorded. For example, data regarding user's preference may be recorded in the recommendation DB 112. For example, it is assumed that the user is listening to a song of a person called "Gunma" on a daily basis, and information regarding the fact is input to the storage unit 110. In this case, a playlist of a song of "Gunma" may be recorded in the recommendation DB 112. Furthermore, in the recommendation DB 112, for example, a score list in which recommendation scores are given for various songs, such as a recommendation score of a song A of 0.2 and a recommendation score of a song B of 0.8, may be recorded. Furthermore, information regarding music, purchase, or the like to be recommended to the user may be recorded in the recommendation DB 112.

The information recorded in the recommendation DB 112 is transmitted to the generation unit 140, and is used by the generation unit 140 to generate output information.

The exchange DB 113 accumulates input information from the user and data regarding output information based on an algorithm for the input information. For example, it is assumed that, on a certain day, the user inputs, to the information processing system 1, input information for requesting to play a song of "Gunma". As a result, it is assumed that the information processing system 1 has generated output information for causing the song of "Gunma" to play based on the algorithm, and has output the output information to the user terminal 20, for example. At this time, the input information, the content of the output information, the time when these pieces of information are input and output, and the like are recorded in the exchange DB 113.

In the present embodiment, the information (for example, information regarding the input information and the output information) recorded in the exchange DB 113 in this manner is used as label information for extracting learning data recorded in the learning DB 114 to be described later. In the first embodiment, the information recorded in the exchange DB 113 is also used to update the information recorded in the knowledge DB 111 or the recommendation DB 112.

When acquiring the input information, the information processing apparatus 10 according to the present embodiment generates output information based on the information recorded in the knowledge DB 111 and the recommendation DB 112. Therefore, the information recorded in the knowledge DB 111 and the recommendation DB 112 is used in the algorithm for generating the output information executed by the information processing apparatus 10. Therefore, when the information recorded in the knowledge DB 111 or the recommendation DB 112 is updated based on the accumulation of the learning data recorded in the exchange DB 113, the above algorithm changes.

Note that the information recorded in the knowledge DB 111 or the recommendation DB 112 may be updated each time the pieces of the input information and the output information are input and output. In this case, every time the pieces of the input information and the output information are input and output, the algorithm by which the information processing apparatus 10 generates the output information changes.

The learning DB 114 records learning data. The recording of the learning data may be performed based on an instruction from the user, or may be automatically performed in the background by the information processing system 1. The learning data may include, for example, various types of information necessary for output, such as a content of the instruction from the user, a situation of the user, and an environment around the user. Furthermore, the learning data may include an index for estimating how appropriate a result (for example, an analysis result by the analysis unit 130 described later or a recommendation result by the recommendation information generation unit 145) is. The index may be, for example, feedback (FB) from the user for analysis or recommendation. A learning history of an algorithm for the information processing apparatus 10 to generate output information is recorded. In the learning DB 114, for example, as illustrated in FIG. 2, a learning history in a format in which learning contents are arranged in time series may be recorded. Note that the learning data itself may not be recorded in the information recorded in the learning DB 114. In this case, information for associating a learning history with learning data corresponding to the learning history may be recorded in the learning DB 114.

### (Processing Unit)

The processing unit 120 has a function of performing various types of processing on the information stored in the storage unit 110. The processing unit 120 has a function of adjusting a degree of influence derived from specific learning data in the accumulated learning data. Furthermore, the processing unit 120 has a function of causing the algorithm to relearn based on new learning data obtained after adjustment. A result of the processing by the processing unit 120 is transmitted to at least one of the analysis unit 130 or the storage unit 110 as necessary. Note that adjustment of the degree of influence and learning for the algorithm will be described later with reference to FIG. 5.

In the present embodiment, the relearning of the algorithm is performed after the degree of influence is adjusted by the processing unit 120. Note that the degree of influence may be, for example, a degree of influence on output information based on an algorithm. Therefore, the output information is corrected by adjusting the degree of influence. Therefore, the information processing apparatus 10 can generate more appropriate output information for the user by adjusting the degree of influence.

Furthermore, the specific learning data may be designated by the user. When the specific learning data is designated by the user, the degree of influence derived from the learning data desired by the user is adjusted. As a result, the information processing apparatus 10 can more appropriately realize the state of the algorithm desired by the user.

Furthermore, the specific learning data may include user data that is data regarding the user. By adjusting the degree of influence derived from the user data, the state of the algorithm desired by the user is more appropriately realized. As a result, the information processing apparatus 10 can generate output information further along the data regarding the user.

Furthermore, the user data may include position information regarding the position of the user. As a result, the information processing apparatus 10 can generate output information of contents more along the position of the user. Furthermore, the user data may include information on preference of the user. As a result, the information processing apparatus 10 can generate output information having contents more suitable for the user's preference.

Furthermore, the processing unit 120 may perform relearning on the algorithm according to a change in the user data. As a result, in a case where there is a change in the user data, the information processing apparatus 10 can realize the state of the algorithm according to the change and generate more appropriate output information.

The processing unit 120 will be described in more detail with reference to FIG. 5. FIG. 5 is a functional block diagram illustrating a configuration of the processing unit 120 according to the first embodiment. As illustrated in FIG. 5, the processing unit 120 can output the corrected learning data by acquiring the learning data, and correcting or the like the learning data. Furthermore, as illustrated in FIG. 5, the processing unit 120 includes an update unit 121, an extraction unit 122, a determination unit 123, and a correction unit 124. The information generated by the functional units may be appropriately transmitted between these functional units.

The update unit 121 has a function of updating various types of information recorded in at least one of the knowledge DB 111 or the recommendation DB 112 of the storage unit 110. For example, the update unit 121 updates various types of information according to the input information from the user. Furthermore, the update unit 121 updates various types of information according to a change in the learning data recorded in the learning DB 114. For example, the update unit 121 may update the recommendation score or the like recorded in the recommendation DB 112 when the learning data recorded in the learning DB 114 is deleted, corrected, or the like.

The information processing apparatus 10 according to the present embodiment executes an algorithm of "acquire input information, and generate output information based on various types of information recorded in the knowledge DB 111 or the recommendation DB 112". In the present embodiment, updating various types of information recorded in the knowledge DB 111 or the recommendation DB 112 corresponds to relearning of the algorithm.

The extraction unit 122 has a function of extracting the various types of information recorded in the storage unit 110. More specifically, the extraction unit 122 extracts a specific learning history matching a predetermined condition from the learning history of the algorithm based on the database in which data regarding the input information is recorded. The specific learning history matching the predetermined condition may be, for example, a learning history that the user desires to delete. The specific learning history matching the predetermined condition is used for relearning of the algorithm. For example, when a specific learning history is deleted, it is determined that there is no learning history, and relearning of the algorithm is performed.

Furthermore, the learning data may be associated with the learning history. The information processing apparatus 10 according to the present embodiment may adjust the degree of influence derived from the learning data. The relearning of the algorithm is performed by adjusting the degree of influence. As a result, the information processing apparatus 10 can generate more appropriate output information for the user.

The extraction unit 122 according to the first embodiment extracts a specific learning history matching a predetermined condition from the learning DB 114 based on the exchange DB 113 in which data regarding input information is recorded. In the first embodiment, the specific learning history matching the predetermined condition may be, for example, a history regarding learning of an algorithm based on learning data including a keyword specified by the user. Therefore, the extraction unit 122 according to the first embodiment extracts a learning history based on the learning data including the keyword specified by the user.

For example, the extraction unit 122 acquires, from the user, input information requesting extraction of a keyword of "Gunma". At this time, the extraction unit 122 may extract information including the keyword of "Gunma" from at least one of the knowledge DB 111, the recommendation DB 112, or the exchange DB 113 of the storage unit 110. Furthermore, the extraction unit 122 according to the present embodiment may extract a learning history indicating that learning has been performed based on learning data including the keyword from the learning DB 114.

The determination unit 123 has a function of performing various determinations. For example, the determination unit 123 may determine a magnitude of change between the output information recorded in the exchange DB 113 and the output information generated by the generation unit 140. A result determined by the determination unit 123 is transmitted to the correction unit 124. Note that, as described later, the correction unit 124 deletes or corrects the learning data based on the determination result.

The correction unit 124 has a function of adjusting the degree of influence derived from the learning data. More specifically, the correction unit 124 according to the first embodiment has a function of adjusting the degree of influence derived from the learning data by deleting or correcting the learning data recorded in the learning DB 114. For example, the correction unit 124 may delete or correct information indicating output information recorded in the learning DB 114.

As described above, exchange information and the like recorded in the exchange DB 113 affect the algorithm. The correction unit 124 can adjust the degree of influence derived from the learning data by deleting or correcting the learning data recorded in the learning DB 114. More specifically, the correction unit 124 can eliminate the degree of influence on the algorithm derived from the learning data by deleting the learning data. Furthermore, the correction unit 124 can increase or decrease the degree of influence on the algorithm derived from the learning data by correcting the learning data. In this manner, the correction unit 124 can adjust the degree of influence derived from the learning data by deleting or correcting the learning data recorded in the learning DB 114.

Furthermore, the information recorded in the knowledge DB 111 or the recommendation DB 112 is information based on learning data recorded in the learning DB 114. Therefore, the correction unit 124 deletes or corrects the learning data (for example, information regarding the input information and the output information) recorded in the learning DB 114, and thus, the information recorded in the knowledge DB 111 or the recommendation DB 112 is relearned. In this way, the information processing apparatus 10 according to the present embodiment adjusts the degree of influence derived from the learning data and causes the algorithm to relearn.

### (Generation Unit)

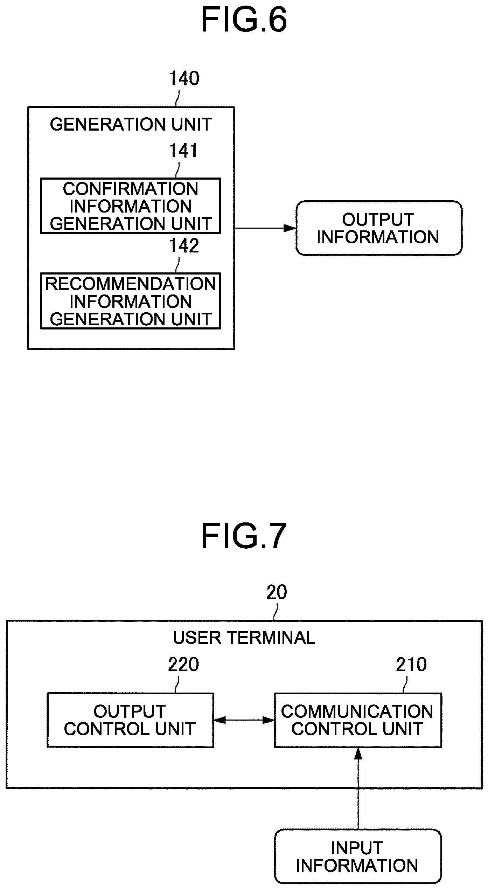

The generation unit 140 has a function of generating various types of output information based on the information stored in the storage unit 110. The generated output information is transmitted to the output control unit 150. The function of the generation unit 140 will be described in more detail with reference to FIG. 6. FIG. 6 is a functional block diagram illustrating a configuration of the generation unit 140 according to the first embodiment. As illustrated in FIG. 6, the generation unit 140 includes a confirmation information generation unit 141 and the recommendation information generation unit 142.

The confirmation information generation unit 141 has a function of generating output information for performing confirmation of each place for the user. For example, when the correction unit 124 deletes the learning data recorded in the learning DB 114, the confirmation information generation unit 141 may generate output information for confirming with the user whether the learning data may be deleted.

The recommendation information generation unit 142 generates output information for performing various recommendations to the user. For example, the recommendation information generation unit 142 may generate output information for playing music desired by the user. At this time, the recommendation information generation unit 142 may determine a content to be recommended to the user based on a recommendation score or the like recorded in the recommendation DB 112, and generate output information.

### (Output Control Unit)

The output control unit 150 has a function of controlling output of the output information. For example, the output control unit 150 may convert the output information acquired from the generation unit 140 into information for causing another terminal to output. For example, in a case where the output information includes text information, the output control unit 150 may convert a content of the text information into voice information to be output as a voice. The output control unit 150 transmits various kinds of acquired or generated information to the communication control unit 160. Note that the output control unit 150 may transmit the output information transmitted from the generation unit 140 to the communication control unit 160 as it is.

### (Communication Control Unit)

The communication control unit 160 has a function of controlling transmission and reception of various types of information between the information processing apparatus 10 and various devices. For example, the communication control unit 160 controls transmission of the information transmitted from the output control unit 150 from the information processing apparatus 10 to the user terminal 20 via the network 30. Furthermore, the communication control unit 160 controls reception of various types of information from an external device (for example, the user terminal 20) by the information processing apparatus 10. The received various types of information are transmitted to the storage unit 110, the processing unit 120, or the analysis unit 130 via the communication control unit 160.

### <<1.2. User Terminal>>

Next, a configuration of the user terminal 20 according to the first embodiment will be described with reference to FIG. 7. FIG. 7 is a functional block diagram illustrating the configuration of the user terminal 20 according to the first embodiment. As illustrated in FIG. 7, the user terminal 20 includes a communication control unit 210 and an output control unit 220.

### (Communication Control Unit)

The communication control unit 210 has a function of controlling transmission and reception of various types of information between the user terminal 20 and various devices (for example, the information processing apparatus 10). The communication control unit 160 acquires input information and controls transmission of the input information to the information processing apparatus 10. Note that the input information may be input to the user terminal 20 based on an operation by the user, or may be automatically input from various devices. Furthermore, the communication control unit 210 controls reception of information regarding the output information transmitted from the information processing apparatus 10. Information regarding the received output information is transmitted to the output control unit 220.

### (Output Control Unit)

The output control unit 220 controls various outputs by the user terminal 20. For example, the output control unit 220 transmits information regarding the output information transmitted from the information processing apparatus 10 to an output device included in the user terminal 20, thereby causing the output device to perform various outputs. For example, the output control unit 220 may control the output device to play music.

### <<1.3. Transmission and Reception of Information between Information Processing System and User terminal>>

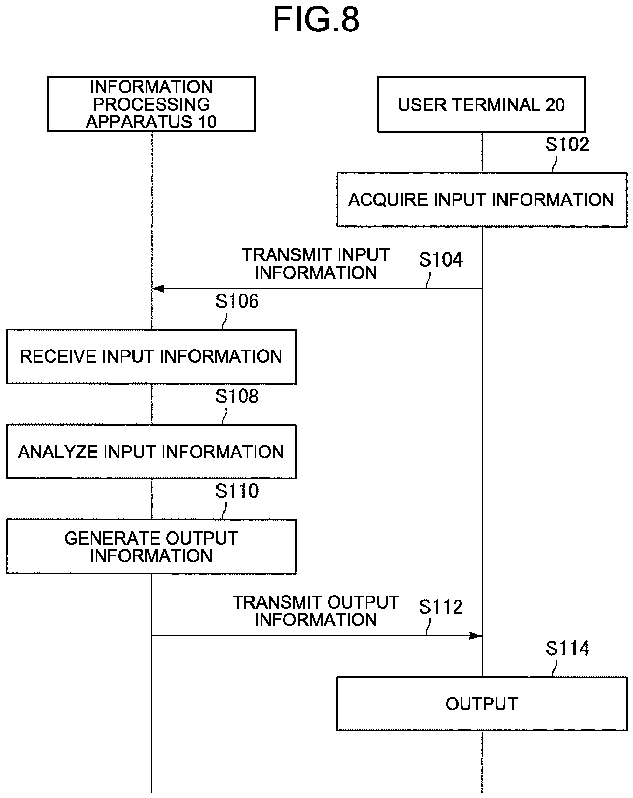

Next, transmission and reception of information between the information processing apparatus 10 and the user terminal 20 according to the first embodiment will be described with reference to FIGS. 8 to 10. FIGS. 8 to 10 are flowcharts illustrating examples of the transmission and reception of information between the information processing apparatus 10 and the user terminal 20 according to the first embodiment. First, an example of the transmission and reception (hereinafter, it is also referred to as "exchange between the information processing apparatus 10 and the user terminal 20") of information (input information and output information) between the information processing apparatus 10 and the user terminal 20 according to the first embodiment will be described with reference to FIG. 8.

In the example illustrated in FIG. 8, the information processing apparatus 10 generates output information in accordance with input information transmitted from the user terminal 20. The user terminal 20 receives the generated output information and outputs various types of information to the user according to the output information. Hereinafter, transmission and reception of information between the information processing apparatus 10 and the user terminal 20 will be described in more detail with reference to FIG. 8.

First, the user terminal 20 acquires input information (Step S102). More specifically, the communication control unit 210 included in the user terminal 20 acquires input information from the user. For example, the communication control unit 210 acquires, as the input information, voice information indicating that a "Gunma's favorite song is XX". Next, the user terminal 20 transmits the input information to the information processing apparatus 10 (Step S104).

Next, the information processing apparatus 10 receives the input information (Step S106). The received input information is transmitted to the analysis unit 130 via the communication control unit 160.

Next, the analysis unit 130 analyzes the input information (Step S108). More specifically, the analysis unit 130 analyzes a semantic content of the input information based on various types of information and the like stored in the knowledge DB 111. For example, it is assumed that the knowledge DB 111 records that the word "Gunma" has only the meaning of "Gunma prefecture". In this case, the analysis unit 130 cannot understand the semantic content of the input information, and outputs, to the storage unit 110, an analysis result that the input information "Gunma's favorite song is XX" is inconsistent. At this time, the storage unit 110 records the result analyzed by the analysis unit 130 in the exchange DB 113. More specifically, the storage unit 110 stores, in the exchange DB 113, the input information of "Gunma's favorite song is XX" in association with the time when the input information is transmitted.

Next, the generation unit 140 generates the output information (Step S110). More specifically, the generation unit 140 outputs the output information based on the result analyzed by the analysis unit 130 and the information stored in the storage unit 110. For example, the generation unit 140 generates voice information "what is Gunma?" as output information, and transmits the output information to the output control unit 150. At this time, the storage unit 110 records the output information of "what is Gunma?" in the learning DB 114 in association with the information recorded in Step S108. At this time, the storage unit 110 records the exchange in the exchange DB 113. More specifically, the storage unit 110 records the time of exchange and the content of exchange in the exchange DB 113.

Next, the information processing apparatus 10 transmits the output information to the user terminal 20 (Step S112).

Next, the user terminal 20 outputs the output information (Step S114). More specifically, the communication control unit 210 acquires the output information transmitted to the user terminal 20 and transmits the output information to the output control unit 220. The output control unit 220 causes the output device included in the user terminal 20 to output the output information based on the output information. Here, the output device outputs voice information "what is Gunma?" as the output information.

Hereinbefore, an example of transmission and reception of information between the information processing apparatus 10 and the user terminal 20 is described. As described above, the pieces of the input information and the output information are recorded in the learning DB 114 and used as learning data.

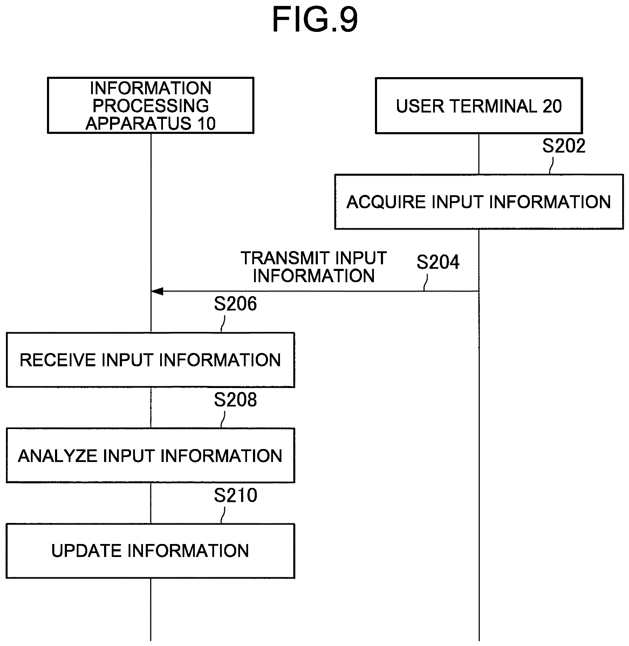

Next, a second example regarding the exchange between the information processing apparatus 10 and the user terminal 20 according to the first embodiment will be described with reference to FIG. 9. The exchange illustrated in FIG. 9 is different from the exchange example illustrated in FIG. 8 in that the information processing apparatus 10 updates the information recorded in the knowledge DB 111 and the recommendation DB 112 based on the input information.

First, the user terminal 20 acquires input information (Step S202). More specifically, the communication control unit 210 acquires input information from the user. For example, the communication control unit 210 acquires voice information "Gunma is a nickname of my friend Iwasa." as the input information.

Next, the processing in Steps S204 and S206 is performed, but the processing in Steps S204 and S206 is substantially the same as the processing in Steps S104 and S106, and thus the description thereof is omitted here.

When the processing in Step S206 ends, the information processing apparatus 10 analyzes the input information (Step S208). More specifically, the analysis unit 130 analyzes the semantic content of the input information based on the information recorded in the knowledge DB 111. The analysis unit 130 transmits the analysis result to the processing unit 120.

Next, the update unit 121 updates the information recorded in the knowledge DB 111 (Step S210). More specifically, the update unit 121 records that "Gunma" is a friend of the user in the knowledge DB 111. Furthermore, here, it is assumed that information of "Gunma's favorite song is XX" is recorded in the knowledge DB 111. At this time, the update unit 121 records, in the knowledge DB 111, that "Gunma" likes the song XX, based on the analysis result in Step S208. In addition, the update unit 121 creates a playlist of songs that are liked by Gunma in the recommendation DB 112. Furthermore, the update unit 121 adds the song XX that is liked by Gunma to the playlist.

Hereinbefore, an example of the exchange between the information processing apparatus 10 and the user terminal 20 is described above with reference to FIG. 9. In the example illustrated in FIG. 9, the information processing apparatus 10 updates the information stored in the storage unit 110 according to the input information from the user terminal 20. As a result, the information processing apparatus 10 can generate output information that further meets the user's desire. For example, in a case where input information of "play Gunma's favorite song." is input, the information processing apparatus 10 can generate output information for causing the user terminal 20 to output XX, which is a favorite song of Gunma.

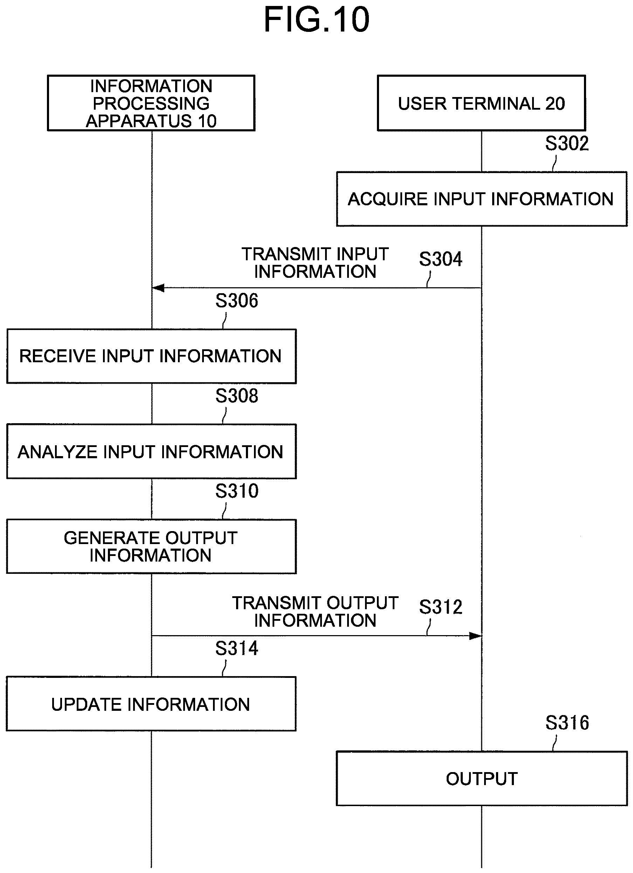

Next, a third example regarding the exchange between the information processing apparatus 10 and the user terminal 20 according to the present embodiment will be described with reference to FIG. 10. In the third example, in addition to the processing according to the second example, processing in which the information processing apparatus 10 transmits output information to the user terminal 20 and the user terminal 20 outputs the output information is added. Hereinafter, a third example will be described with reference to FIG. 10.

First, the user terminal 20 acquires input information (Step S302). More specifically, the communication control unit 210 acquires input information from the user. For example, the communication control unit 210 acquires voice information "play the song of Gunma." as the input information.

Next, the processing of Steps S304 to S308 is performed, but since the processing of Steps S304 to S306 is substantially the same as the processing of Steps S204 to S208, the description thereof is omitted here.

When the processing in Step S308 ends, the information processing apparatus 10 generates output information (Step S310). More specifically, the recommendation information generation unit 142 generates output information based on an analysis result by the analysis unit 130 and information recorded in the recommendation DB 112. For example, the recommendation information generation unit 142 generates output information for playing a song included in a favorite playlist of the Gunma stored in the recommendation DB 112. The song to be played may be a song with the highest recommendation score or a song with a recommendation score randomly selected from the top 5%, for example. The recommendation information generation unit 142 transmits the output information to the output control unit 150.

Next, the information processing apparatus 10 transmits the output information to the user terminal 20 (Step S312).

Next, the information processing apparatus 10 updates the information stored in the storage unit 110 (Step S314). For example, the update unit 121 increases the recommendation score of the song selected by the recommendation information generation unit 142. In addition, the update unit 121 records the input information which is input and the output information which is output, in the learning DB 114. In addition, the time of exchange, the content of exchange, and the like are recorded in the exchange DB 113.

Next, the user terminal 20 outputs the output information (Step S316). More specifically, the communication control unit 210 acquires the output information transmitted to the user terminal 20, and transmits the acquired output information to the output control unit 220. The output control unit 220 causes the output device to output the output information. As a result, the output device plays, for example, a song included in the playlist that is liked by the Gunma.

Hereinbefore, the third example of the exchange between the information processing apparatus 10 and the user terminal 20 according to the present embodiment is described with reference to FIG. 10. According to the third example, the information processing apparatus 10 generates the output information in accordance with the input information from the user terminal 20, and transmits the generated output information to the user terminal 20. Furthermore, the information processing apparatus 10 updates the information stored in the storage unit 110 according to the input information and the output information.

In the above description using FIGS. 8 to 10, the output information regarding the "Gunma" is generated based on the input information including the noun "Gunma". The present invention is not limited thereto, and the output information regarding the "Gunma" may be generated based on the input information not including the noun "Gunma". That is, the user can also instruct the information processing apparatus 10 to implicitly generate the output information regarding "Gunma" without uttering the word "Gunma".

For example, it is assumed in Step S302 that the user inputs voice information such as "play a song with a taste similar to the song heard yesterday." as the input information. The voice information does not include the word "Gunma", but the "song heard yesterday" means the "song of Gunma". Then, in Step S308, the analysis unit 130 can analyze that the "song heard yesterday" included in the input information of the user means the "song of Gunma" based on the information recorded in the knowledge DB 111. As a result, in Step S310, the recommendation information generation unit 142 generates output information for causing the user terminal 20 to play a song having a taste similar to the "song of Gunma". In response to this, in Step S314, the update unit 121 increases the recommendation score of a song having a taste similar to the "song of Gunma" stored in the recommendation DB 112. Further, in Step S316, the user terminal 20 plays a song having a taste similar to that of the "song of Gunma".

Here, an example in which the user inputs voice information "play a song with a taste similar to the song heard yesterday." in Step S302 is described. However, voice information "play a song completely different from the song heard yesterday." may be input to the user terminal 20. In this case, the recommendation information generation unit 142 generates output information for causing the user terminal 20 to play a song having a taste completely different from the "song of Gunma". As a result, the user terminal 20 can play a song having a taste completely different from that of the "song of Gunma". Furthermore, the update unit 121 may increase a recommendation score of a song having a taste completely different from the "song of Gunma" recorded in the recommendation DB 112.

As described above, according to the information processing apparatus 10 and the user terminal 20 according to the present embodiment, the user can cause the user terminal 20 to output the output information regarding the "Gunma" without directly uttering the noun "Gunma". Furthermore, the update unit 121 can also update various types of information regarding the "Gunma" stored in the storage unit 110.

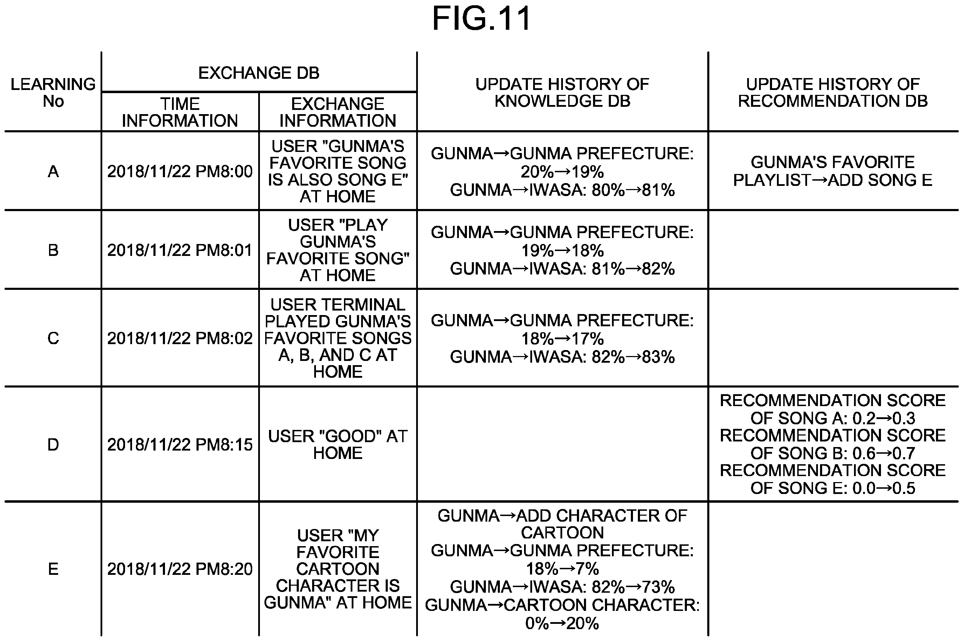

Hereinbefore, the exchange between the information processing apparatus 10 and the user terminal 20 according to the present embodiment is described. Next, the exchange DB 113, the update history of the knowledge DB 111, and the update history of the recommendation DB 112 constructed based on the exchange will be described with reference to FIG. 11. FIG. 11 is a diagram illustrating an example of information recorded in the exchange DB 113, the update history of the knowledge DB 111, and the update history of the recommendation DB 112 according to the first embodiment.

FIG. 11 illustrates five pieces of information (Nos. A to E) for each of the exchange DB 113, the update history of the knowledge DB 111, and the update history of the recommendation DB 112. For example, in No. A of the exchange DB 113, "2018/11/22 PM 8:00" is recorded as the time information, and as the exchange information, it is recorded that the user inputs the input information "Gunma's favorite song is the song E." at home. The analysis unit 130 analyzes that the word "Gunma" in the input information means the name of the person "Iwasa". Then, the update unit 121 increases the probability that the word "Gunma" means "Iwasa". More specifically, the update unit 121 increases the probability that the word "Gunma" recorded in the knowledge DB 111 means "Iwasa" from 80% to 81%. As a result, the analysis unit 130 analyzes the word "Gunma" to mean the name (nickname) "Iwasa" with a probability of 81%. Meanwhile, the update unit 121 reduces the probability that the word "Gunma" stored in the knowledge DB 111 means the prefecture name "Gunma" from 20% to 19%. As a result, the analysis unit 130 analyzes the word "Gunma" to mean the prefecture name "Gunma" with a probability of 19%. In addition, the update unit 121 adds the song E to the favorite playlist of "Gunma" and records the song E in the recommendation DB 112.

Hereinafter, similarly to No. A, the records of the knowledge DB 111 and the recommendation DB 112 are updated according to the exchange information regarding Nos. B to E. Specifically, in No. B of the exchange DB 113, "2018/11/28 PM 8:01" is recorded as the time information, and as the exchange information, it is recorded that there was input information from the user at home, "play Gunma's favorite song." In response to this, in the knowledge DB 111, the probability that "Gunma" means "Gunma prefecture" is updated from 19% to 18%, and the probability that "Gunma" means "Iwasa" is updated from 81% to 82%.

Furthermore, in No. C of the exchange DB 113, "2018/11/28 PM 8:02" is recorded as the time information, and as exchange information, it is recorded that the user played songs A, B, and E from Gunma's favorite playlist at home. In response to this, in the knowledge DB 111, the probability that "Gunma" means "Gunma prefecture" is updated from 18% to 17%, and the probability that "Gunma" means "Iwasa" is updated from 82% to 83%.

Furthermore, in No. D of the exchange DB 113, "2018/11/28 PM 8:15" is recorded as the time information, and as the exchange information, it is recorded that the user input the input information "good" at home. It is presumed that the input information "good" is a response to the songs A, B, and E in No. C playing. Therefore, in the recommendation DB 112, the recommendation score of the song A is updated from 0.2 to 0.3, the recommendation score of the song B is updated from 0.6 to 0.7, and the recommendation score of the song E is updated from 0.0 to 0.5.

Moreover, in No. E of the exchange DB 113, "2018/11/28 PM 8:20" is recorded as the time information and as the exchange information, it is recorded that the user input the input information "my favorite cartoon character is Gunma" at home. In response to this, in the knowledge DB 111, the probability that "Gunma" means "Gunma prefecture" is updated from 17% to 7%, and the probability that "Gunma" means "Iwasa" is updated from 82% to 73%. Furthermore, in the knowledge DB 111, that there is a possibility that "Gunma" is a character of a cartoon is added, and the probability that "Gunma" means the character of the cartoon is updated from 0% to 20%.

As described above, various types of information stored in the information processing apparatus 10 are updated by the exchange between the information processing apparatus 10 and the user terminal 20 according to the present embodiment. More specifically, the information stored in the exchange DB 113 is used as learning data, and the information stored in the knowledge DB 111 and the recommendation DB 112 is updated according to the accumulation of the learning data. The generation unit 140 generates output information based on the information stored in the knowledge DB 111 and the recommendation DB 112. Therefore, as the learning data is accumulated, an algorithm for the information processing apparatus 10 to output the output information changes.

Hereinafter, a method of causing an algorithm that changes based on accumulation of learning data in this manner to relearn will be described. More specifically, the information processing apparatus 10 adjusts the degree of influence derived from the learning data to cause the algorithm to relearn. As described above, the information recorded in the learning DB 114, which is the learning data, affects the information recorded in the knowledge DB 111 or the recommendation DB 112. The information processing apparatus 10 according to the present embodiment adjusts the degree of influence on the information recorded in the knowledge DB 111 or the recommendation DB 112 by correcting or the like the information recorded in the exchange DB 113. As a result, relearning of the algorithm is performed.

As described above, the exchange DB 113 includes the information regarding the input information by the user, the information regarding the output information, the information regarding the state change of the storage unit 110, or the like. The information processing apparatus 10 according to the present embodiment can cause the algorithm to relearn as long as at least one of these pieces of information is stored. Here, the information regarding the input information by the user may be information indicating "who said/when/where/what" or the like. Furthermore, the information regarding the output information may be information indicating "when/where/what the information processing apparatus 10 has said or recommended" or the like. Furthermore, the information regarding the state change of the storage unit 110 includes information such as the update history of the knowledge DB 111 or the update history of the recommendation DB 112.

### <<1.4. Algorithm Relearning Method>>

### <<<1.4.1. First Algorithm Relearning Method>>>

Next, a first method in which the information processing apparatus 10 causes the algorithm to relearn will be described.

In the first algorithm relearning method, the information processing apparatus 10 extracts a keyword from the exchange DB 113, and deletes information included in the knowledge DB 111, the recommendation DB 112, and the exchange DB 113 based on an extraction result.

More specifically, the extraction unit 122 acquires a keyword for extraction and extracts the keyword from the exchange DB 113. Note that the keyword may be input to the user terminal 20 by the operation of the user, transmitted to the information processing apparatus 10, and transmitted to the extraction unit 122, for example. Here, it is assumed that the word "Gunma" is transmitted as the keyword to the extraction unit 122. The extraction unit 122 searches the exchange DB 113 for information including "Gunma" and extracts learning data from the learning DB 114.

Next, the correction unit 124 deletes the learning data including the "Gunma" recorded in the learning DB 114. For example, the correction unit 124 deletes learning data including "Gunma" such as "Gunma's favorite song is XX.", "Gunma is a nickname of my friend Iwasa.", and "play the song of Gunma." recorded in the learning DB 114. Furthermore, the correction unit 124 deletes the information indicating that "Gunma" means "Iwasa", recorded in the knowledge DB 111. Furthermore, the correction unit 124 deletes the favorite playlist of "Gunma" stored in the recommendation DB 112, and returns the recommendation score of the favorite song of "Gunma" to the original.

As a result, when input information of "play the song of Gunma." is input to the information processing apparatus 10 as the input information, the information processing apparatus 10 analyzes the content of the input information to be inconsistent. For example, the confirmation information generation unit 141 included in the information processing apparatus 10 may generate output information of "what is Gunma?". Meanwhile, the recommendation information generation unit 142 may generate output information indicating "there is no playlist that Gunma likes.".

In this way, by deleting the information regarding the "Gunma" from the storage unit 110, it is possible to delete the influence on the algorithm based on the learning data including the word "Gunma". However, this alone may cause inconvenience.

For example, information not including the word "Gunma" cannot be found by extraction using the keyword "Gunma" described above. For example, it is assumed that input information of "play a song with a taste similar to the song heard yesterday." is input to the information processing apparatus 10 as the input information. In a case where the song heard yesterday is the song of Gunma, the recommendation score of the taste similar to the song of Gunma is updated. In this case, the input information not including the word "Gunma" directly affects the information in the recommendation DB 112.

Moreover, it is assumed that input information of "play a song completely different from the song heard yesterday." is input to the information processing apparatus 10. In a case where the song heard yesterday is the song of Gunma, the recommendation score of the song having a taste completely different from the song of Gunma is updated in the recommendation DB 112. That is, the input information not including the word "Gunma" indirectly affects the information in the recommendation DB 112.

As described above, it is considered that there is a case where the user desires to delete the influence based on the input information not including the information of "Gunma" from the storage unit 110. Therefore, as a method of deleting these influences, a method of storing information regarding various data in the storage unit 110 in advance, for example, can be considered. For example, a method is conceivable in which input information of "play a song with a taste similar to the song heard yesterday." and "play a song completely different from the song heard yesterday." is stored in the exchange DB 113 as information associated with information of "play the song of Gunma.". As a result, in a case where the exchange DB 113 is searched with the keyword of "Gunma", the above-described information of "play a song with a taste similar to the song heard yesterday." and "play a song completely different from the song heard yesterday." is searched from the exchange DB 113. The learning data is deleted from the learning DB 114 based on the searched information, and the information of the knowledge DB 111 and the recommendation DB 112 regarding these two pieces of information is also deleted.

However, in the above method, it is necessary to store information indicating a relationship between various types of information stored in the exchange DB 113, for example, in the exchange DB 113. Therefore, the information recorded in the exchange DB 113 becomes enormous.

### <<<1.4.2. Second Algorithm Relearning Method>>>

Therefore, in a second algorithm relearning method, in a case where inconsistency occurs in the output information when certain information is deleted, the deleted information is determined as related information. More specifically, when certain information is deleted, in a case where the output information before deletion is different from the output information after deletion, the deleted information is determined as information regarding the keyword. According to the second algorithm relearning method, it is not necessary to record information indicating the relationship between various types of information stored in the exchange DB 113.

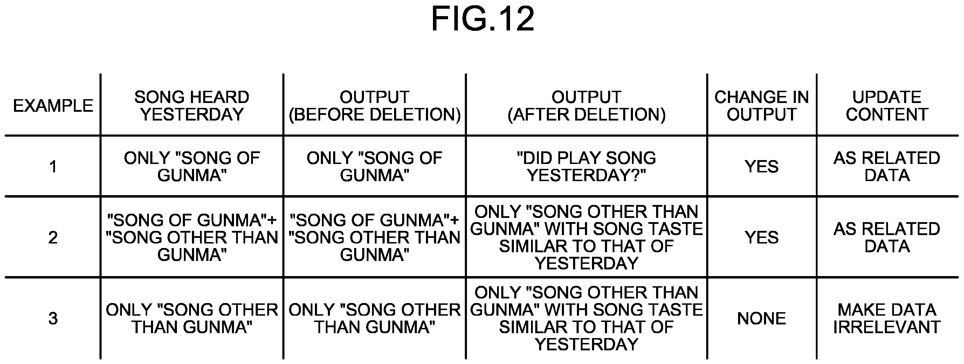

The second algorithm relearning method will be described with reference to FIG. 12. More specifically, a method of determining whether or not the information regarding the exchange is associated with the keyword based on a change in output information output based on the algorithm when the information regarding the exchange including the keyword is deleted will be described.

FIG. 12 is a diagram illustrating output information generated before and after deletion of information regarding the exchange and processing contents based on changes in the output information before and after the deletion. Three examples are illustrated in FIG. 12. Hereinafter, three examples illustrated in FIG. 12 will be described. From a left side, the song that the user heard yesterday, the output (before and after deletion), the change in the output, and the processing content are illustrated.

The output (before deletion) is a content of output information corresponding to input information "play a song with a taste similar to the song heard yesterday." from the user. Further, in the following three examples, the extraction unit 122 extracts information including the keyword of "Gunma" from the storage unit 110, and the correction unit 124 deletes the extracted information. The content of the output information with respect to the input information after the deletion is illustrated as output (after deletion).

In the first example, it is recorded that the user heard only the "song of Gunma" yesterday as the exchange information. For this reason, the output information with respect to the input information is information for causing only the "song of Gunma" to play. Meanwhile, when the information including "Gunma" is deleted, the history that the "song of Gunma" has been played disappears, and thus, the algorithm cannot understand the intention of the user. Therefore, the output information changes to the information of "did play a song yesterday?". As described above, when the output information changes due to deletion of the information including the keyword "Gunma", the determination unit 123 determines that the input information is data (related data) regarding the keyword "Gunma". As described above, the information processing apparatus 10 according to the present embodiment can delete the information including the keyword and determine a relevance between the input information and the keyword according to the change in the output information before and after the deletion. Therefore, the information processing apparatus 10 does not need to store what kind of keyword is associated with each piece of input information.

Then, in the second example, the user heard a song of Gunma and a song other than Gunma yesterday. That is, the output (before deletion) is an output in which the "song of Gunma" and the "song other than Gunma" are made to play. Meanwhile, the output (after deletion) after deletion of various types of information including "Gunma" is an output in which only the "song other than Gunma" plays. Also in this case, there is a change between the output (before deletion) and the output (after deletion). Therefore, the determination unit 123 determines that the input information is related data of the keyword "Gunma".

Then, in the third example, the user heard only the "song other than Gunma" yesterday. Therefore, the output (before deletion) is an output in which only the "song other than the Gunma" plays. Meanwhile, the output (before deletion) is an output not regarding the keyword. Therefore, there is no change in the output (after deletion) from the output (before deletion). At this time, the determination unit 123 determines that the input information is data not regarding the keyword.

In this way, by determining the relevance between the keyword and the input information, the input information regarding the keyword can also be deleted based on the keyword. That is, it is possible to delete not only the input information "play the song of Gunma." but also the input information regarding the keyword "play a song with a taste similar to the song (of Gunma) that heard yesterday." or "play a song completely different from the song (of Gunma) heard yesterday.". When the input information is deleted, it means that the exchange based on the deleted input information was not performed, and various types of information recorded in the knowledge DB 111 and the recommendation DB 112 are updated. As described above, according to the second algorithm relearning method, it is possible to cause the algorithm to relearn by deleting the information regarding the exchange that is the learning data regarding the keyword.

In addition, according to the second algorithm relearning method, the relevance between the keyword and the input information is determined based on the change in the output information. Therefore, the information processing apparatus 10 does not need to store the relevance between various keywords and the input information, and can correct the information regarding the exchange based on less information. As a result, the information processing apparatus 10 can cause the algorithm to relearn based on less information.

### <<<1.4.3. Third Algorithm Relearning Method>>>

In the above-described second algorithm relearning method, the information regarding the input information regarding the keyword is deleted from the exchange DB 113. Therefore, data (for example, data regarding the user's liking/preference) included in the input information and not directly related to the keyword may be deleted.

Therefore, it is conceivable to correct the input information having a small degree of influence on the output information without deleting the input information. As a result, the influence on the output information from the input information regarding the keyword can be prevented from being completely deleted. As a result, the possibility of deleting data (for example, data regarding the user's liking/preference) or the like not regarding the keyword is reduced.

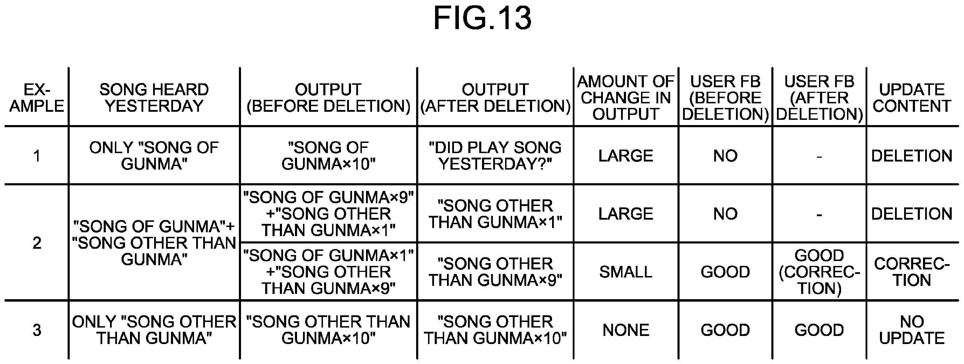

With reference to FIG. 13, it will be described that the information regarding the output recorded in the learning DB 114 is corrected. FIG. 13 illustrates four examples in which the output recorded in the learning DB 114 is corrected. Four examples in which the output is corrected will be described below. Note that, in any example, it is assumed that the output for the input information "play the song of Gunma." is corrected. Specifically, the extraction unit 122 searches for the keyword of "Gunma" from the exchange DB, and extracts the learning data from the learning DB 114 based on the search result. The correction unit 124 corrects the output according to the extraction result as described below.

In a first example, the user heard only the "song of Gunma" yesterday. That is, specifically, ten songs of Gunma are played. It is assumed that there is a feedback (FB) of "No" for the output since the user intends to delete the information regarding "Gunma". In this case, the correction unit 124 deletes the information regarding "Gunma" from the storage unit 110. Then, the analysis unit 130 cannot understand the semantic content of the input information "play the song of Gunma.". In response to this, the generation unit 140 generates output information of "did play a song yesterday?". As described above, in the first example, since the change in the output is large, the determination unit 123 determines that the change in the output is large. In response to the determination result, the correction unit 124 deletes the exchange information corresponding to the first example from the exchange DB. That is, the correction unit 124 deletes the learning data recorded in the learning DB 114 associated with the exchange information. Furthermore, the correction unit 124 also deletes the FB of the user from the learning DB 114.

Next, in the second and third examples, the user heard the "song of Gunma" and "songs other than Gunma" yesterday. However, in the second example and the third example, the number of "songs of Gunma" and the number of "songs other than Gunma" heard by the user are different. Specifically, in the second example, the user terminal 20 plays nine "songs of Gunma" and one "song other Gunma". Meanwhile, in the third example, the user terminal 20 plays one "song of Gunma" and nine "songs other than Gunma".

In the second example, before and after the deletion of the learning data regarding the keyword "Gunma", the output information is changed from the information of playing nine "songs of Gunma" and one "song other than Gunma" to the information of playing one "song of Gunma". In this case, the exchange information in the second example is deleted. Accordingly, the FB of "No" of the user is also deleted.

Meanwhile, in the third example, before and after the deletion of the learning data regarding the keyword "Gunma", the output information is changed from the information of play one "song of Gunma" and nine "songs other than Gunma" to nine "songs other than Gunma". In this case, since the change in the output information is small, the output result of playing nine "songs other than Gunma" is deleted. Along with this, the FB of the user "good" is also maintained. Note that, in this case, the FB from the user is recorded on the assumption that the output information after the learning data regarding the keyword "Gunma" is deleted in the output information is output.

As described above, according to the information processing apparatus 10 according to the present embodiment, the content of the output is corrected according to the magnitude of the change in the output. That is, the information processing apparatus 10 can adjust the degree of influence on the algorithm derived from the output information by not only deleting the record of the output information but also correcting the output information. As a result, the information processing apparatus 10 can realize the state of the algorithm desired by the user.

In the fourth example, the user heard only the "song of Gunma" yesterday. In this case, before and after the learning data regarding the keyword is deleted, the output information is not changed from the information of playing ten "songs other than Gunma". Therefore, there is no change in the output. Therefore, the user FB remains "good", and the update regarding the output information is not performed.

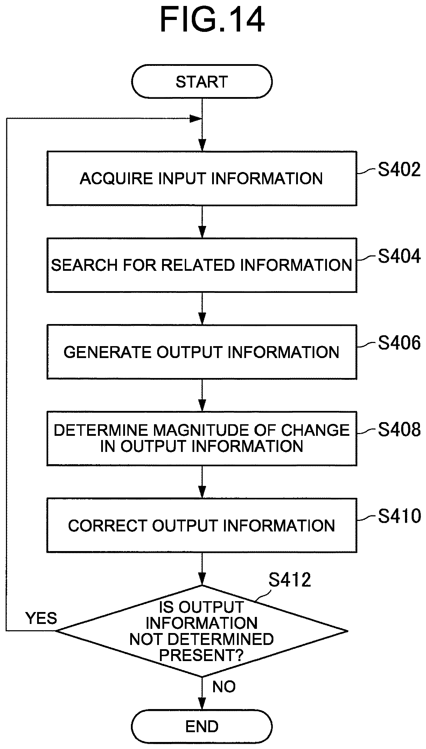

Hereinbefore, the outline of the example of correcting the output by the information processing system 1 according to the present embodiment is described with reference to FIG. 13. Next, update processing of the exchange DB 113 by the information processing apparatus 10 according to the present embodiment will be described in more detail with reference to FIG. 14. FIG. 14 is a flowchart illustrating the update processing of the exchange DB 113 by the information processing apparatus 10 according to an embodiment of the present disclosure. The update processing will be described below with reference to FIG. 14.

First, the information processing apparatus 10 acquires input information (Step S402). More specifically, the information processing apparatus 10 receives, for example, a keyword input from the user to the user terminal 20 and information (hereinafter, it is also simply referred to as "request information") requesting deletion of learning data regarding the keyword as input information via the network 30. Here, the keyword is assumed to be, for example, the word "Gunma". The information processing apparatus 10 receives the keyword and the request information as input information, and transmits the received input information to the extraction unit 122 included in the processing unit 120 via the communication control unit 160.

Next, the extraction unit 122 extracts related information based on the transmitted input information (Step S404). Specifically, the extraction unit 122 extracts information regarding the word "Gunma" of the keyword. More specifically, the extraction unit 122 extracts information stored in the knowledge DB 111, the recommendation DB 112, or the exchange DB 113 regarding the word "Gunma" of the keyword. Note that the extraction unit 122 does not extract the output information recorded in the exchange DB 113.

Next, the generation unit 140 generates output information (Step S406). At this time, the generation unit 140 generates the output information on the assumption that the related information (note that the input information used in Step S406 is excluded) extracted in Step S404 has been deleted. That is, the generation unit 140 generates the output information on the assumption that there is no exchange or the like regarding the keyword "Gunma". At this time, the output information generated by the generation unit 140 may be different from the output information recorded in the exchange DB 113.

Next, the determination unit 123 determines the magnitude of the change in the output information (Step S408). More specifically, the determination unit 123 determines the magnitude of the difference between the output information generated in Step S406 and the output information corresponding to the input information used to generate the output information, recorded in the learning DB 114, as the magnitude of the change in the output information.

Next, the correction unit 124 corrects the output information recorded in the learning DB 114 according to the determination result by the determination unit 123 in Step S408 (Step S410). For example, in a case where it is determined in Step S408 that the change in the output information is large, the correction unit 124 deletes the output information to be determined in Step S408 recorded in the learning DB 114 and the input information recorded in the learning DB 114 corresponding thereto. In this way, in a case where the output information is deleted, there is no influence on the algorithm from the output information.

In addition, in a case where it is determined in Step S408 that there is no change in the output information, the correction unit 124 maintains the output information which has been recorded in the exchange DB 113 and has been determined in Step S408. Furthermore, in a case where it is determined in Step S408 that there is a change in the output information and the change is not large, the correction unit 124 corrects the output information recorded in the exchange DB 113 and determined in Step S408.

Next, in a case where the extraction unit 122 determines that there is undetermined output information based on the exchange DB 113 (Step S412: Yes), the process returns to Step S402. Meanwhile, when it is determined that there is no undetermined output information based on the exchange DB 113 (Step S412: No), the update processing illustrated in FIG. 14 ends.

As described above, the information processing apparatus 10 according to the present embodiment corrects the exchange information recorded in the exchange DB 113. That is, the learning data recorded in the learning DB 114 is corrected. As a result, the degree of influence derived from the learning data such as the input information or the output information recorded in the learning DB 114 is adjusted, and the relearning of the algorithm is performed. As a result, the information processing apparatus 10 can more appropriately realize the state of the algorithm desired by the user.

### <2. Second Embodiment>

In the first embodiment, the example of using an algorithm based on a rule based method (that is, a method using the score or the like recorded in the recommendation DB 112 in the knowledge DB 111) is described. However, for example, the technique of the present disclosure can also be applied to a technique in which a specific processing content is a black box, such as various machine learning techniques typified by deep learning. In a second embodiment, an example in which the technique of the present disclosure is applied to a machine learning technique such as the deep learning will be described. Note that, in the following description, description of contents overlapping with those of the first embodiment will be omitted.

### «2.1. Configuration of Information Processing Apparatus>>

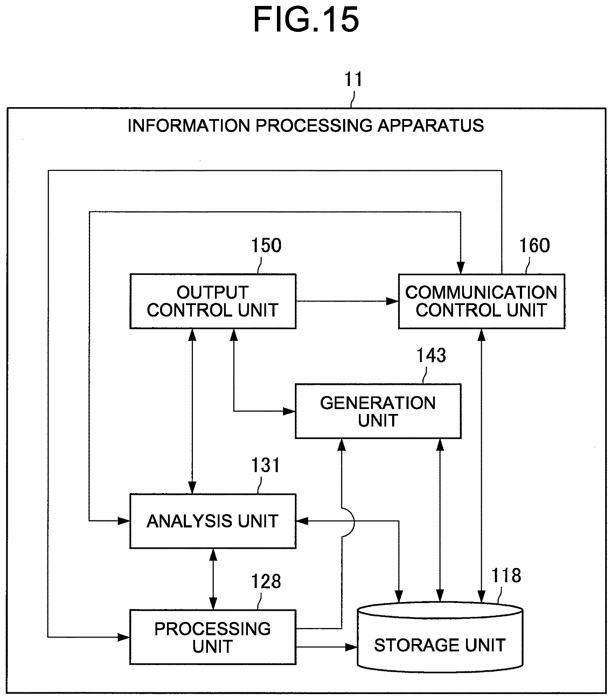

A configuration of an information processing apparatus 11 according to the second embodiment will be described with reference to FIG. 15. FIG. 15 is a functional block diagram illustrating a configuration of the information processing apparatus 11 according to the second embodiment. As illustrated in FIG. 15, the information processing apparatus 11 includes a storage unit 118, a processing unit 128, an analysis unit 130, a generation unit 143, an output control unit 150, and a communication control unit 160. Hereinafter, the storage unit 118, the processing unit 128, and the generation unit 143 different from the functional units included in the information processing apparatus 11 according to the first embodiment will be described.

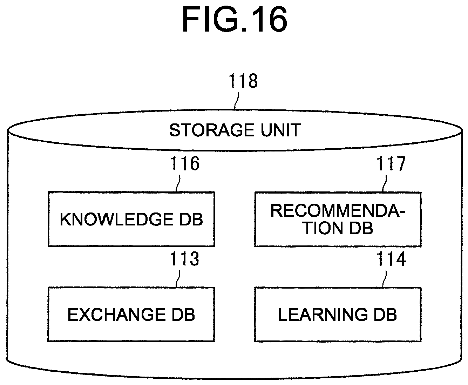

First, the storage unit 118 according to the second embodiment will be described with reference to FIG. 16. FIG. 16 is a functional block diagram illustrating a configuration of the storage unit 118 according to the second embodiment. The storage unit 118 according to the second embodiment includes a knowledge DB 116, a recommendation DB 117, an exchange DB 113, and a learning DB 114.

In addition, the knowledge DB 116 according to the second embodiment does not record data stochastically indicating the semantic contents of words as in the knowledge DB 111 according to the first embodiment. Furthermore, the recommendation DB 117 according to the second embodiment does not record the recommendation score recorded in the recommendation DB 112 according to the first embodiment. In the second embodiment, analysis of the semantic content of the word, recommendation to the user, or the like is performed based on a black box parameter (hereinafter, also simply referred to as a "parameter") included in the analysis unit 131 and the generation unit 143 described later. Therefore, in the second embodiment, information recorded in the knowledge DB 116 and the recommendation DB 117 according to the second embodiment is different from information recorded in the knowledge DB 111 and the recommendation DB 112 according to the first embodiment. More specifically, the analysis unit 131 or a recommendation information generation unit 145 inputs an input value to a network in which an input layer including a plurality of inputs and an output layer including a plurality of outputs are connected by an intermediate layer including multiple layers, and outputs an output value regarding an analysis result, recommendation information, or the like. Hereinafter, a parameter that defines weight of a node in the network is referred to as the "black box parameter".

In the learning DB 114, the input value and the output value are recorded in an event in which learning data is recorded. The input value is, for example, various types of information necessary for obtaining an output value such as a user instruction, a user situation, and environment information. The output value can be, for example, an index (for example, information such as a user's reaction) for estimating how appropriate the analysis result or the like is. The recording of the learning data can be performed based on an instruction by the user or automatically by the information processing apparatus 11 in the background. In the present embodiment, indices of events are recorded as data in the exchange DB 113. Furthermore, label information (for example, an occurrence time of the event, information indicating the content of the input information or the output information, and the like) for extracting learning data necessary for relearning of the algorithm recorded in the event is recorded in the exchange DB 113. Therefore, the learning data can be extracted from the learning DB 114 based on the exchange DB 113.

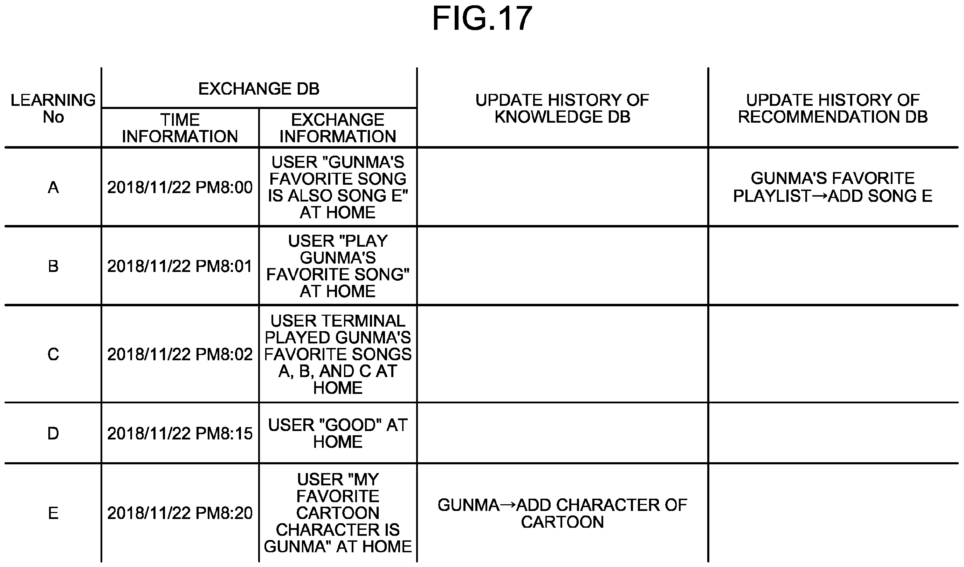

With reference to FIG. 17, the information stored in the storage unit 118 according to the second embodiment will be described focusing on the difference from the information stored in the storage unit 110 according to the first embodiment. FIG. 17 is a diagram illustrating examples of the information recorded in the exchange DB 113, the update history of the knowledge DB 116, and the update history of the recommendation DB 117 according to the second embodiment. As illustrated in FIG. 17, the knowledge DB 116 and the recommendation DB 117 do not record information regarding the probability of the semantic content and the information such as the recommendation score. Therefore, as illustrated in FIG. 17, the storage unit 118 according to the second embodiment does not store the update history of the semantic content, the update history of the recommendation score, or the like as illustrated in FIG. 11. Note that the information regarding the exchange is recorded in the exchange DB 113 according to the second embodiment, similarly to the exchange DB 113 according to the first embodiment.

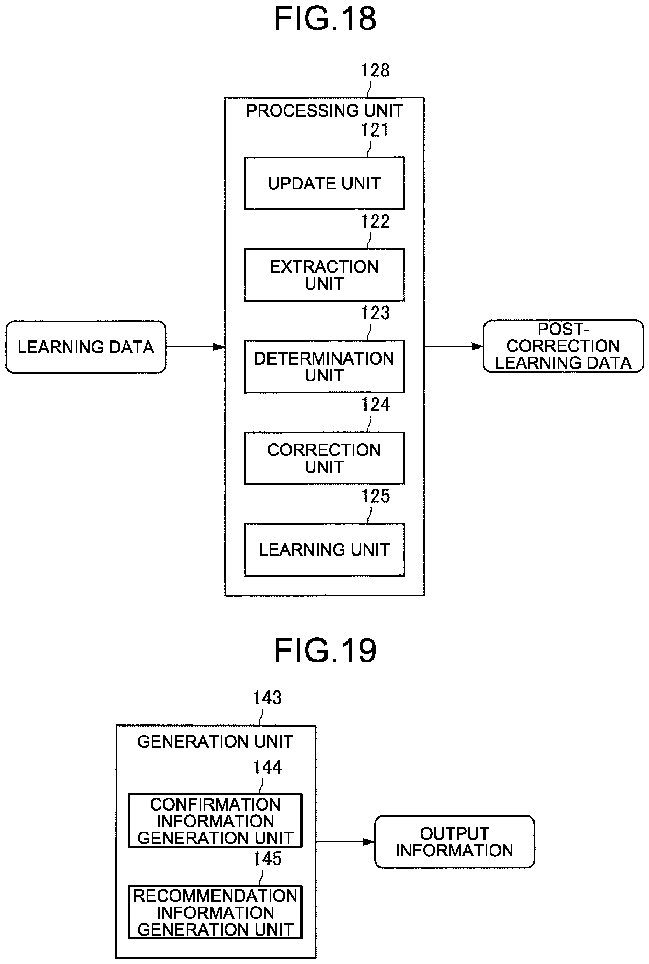

Next, the processing unit 128 according to the second embodiment will be described with reference to FIG. 18. FIG. 18 is a functional block diagram illustrating a configuration of the processing unit 128 according to the second embodiment. The processing unit 128 according to the second embodiment includes a learning unit 125 in addition to the functional units included in the processing unit 120 according to the first embodiment.

The learning unit 125 has a function of performing learning (for example, reinforcement learning) of various parameters included in the analysis unit 131 or the generation unit 143. More specifically, the learning unit 125 performs parameter learning based on the exchange information recorded in the exchange DB 113, for example, based on a technique such as the reinforcement learning. As a result, the parameter is updated. Here, the parameter learning means optimizing the black box parameter according to the accumulation of the input value and the output value (that is, the learning data). Note that the learning unit 125 may learn a parameter when the information regarding the exchange recorded in the exchange DB 113 is added, deleted, or corrected.

When acquiring the input information, the information processing apparatus 11 according to the second embodiment generates the output information based on various parameters included in the analysis unit 131 or the generation unit 143. Therefore, updating the parameter by the learning unit 125 corresponds to that the information processing apparatus 11 causes the algorithm for generating the output information to relearn.

Next, the analysis unit 131 will be described. In the second embodiment, the correspondence relationship between the input information and the output information to obtain a positive FB is learned as a black box parameter (semantic analysis parameter). Unlike the analysis unit 130 according to the first embodiment, the analysis unit 131 according to the second embodiment obtains the optimum correspondence from the preceding and subsequent contexts/situations using the semantic analysis parameter, instead of the correspondence relationship between the input information and the semantic content in the form of probability. More specifically, in a case where voice information from the user is input, the analysis unit 131 outputs a semantic analysis result of the voice information based on the semantic analysis parameter, for example, using the voice information as an input value. Furthermore, the analysis unit 131 may output a semantic analysis result of the voice information using various types of information (user's situation, characteristic information, environment information, content of user's instruction, and the like) as an input value in addition to the voice. Here, the characteristic information of the user may be, for example, information regarding characteristics of the user such as age, gender, or address. Furthermore, the environment information may be information regarding a space in which the user exists, such as information regarding time, a place, a person who is together, or the like. For example, the analysis unit 131 may analyze "Gunma" as meaning a person called "Iwasa" when talking about a friendship until just before. Furthermore, in a case where the user has come to travel to Gunma prefecture, "Gunma" may be analyzed to mean the prefecture name of "Gunma". In this manner, the content that has been discussed until just before may be reflected in the semantic analysis parameter. Further, a content of the location may be reflected in the semantic analysis parameter. In the present embodiment, the semantic analysis result output by the analysis unit 131 is used as an input value for the recommendation information generation unit 145 to be described later to generate recommendation information. Note that the analysis unit 130 also performs semantic analysis at the time of relearning of the algorithm, and details of processing at that time will be described later.

Next, the generation unit 143 will be described with reference to FIG. 19. FIG. 19 is a functional block diagram illustrating a configuration of the generation unit 143 according to the second embodiment. The generation unit 143 illustrated in FIG. 19 includes a confirmation information generation unit 144 and the recommendation information generation unit 145, similarly to the generation unit 140 according to the first embodiment. As described above, the recommendation information generation unit 142 according to the first embodiment generates output information for recommending a song based on, for example, a recommendation score of the song. Meanwhile, in the second embodiment, it is learned as a black box parameter (recommendation parameter) which song is recommended to generate the recommendation information to obtain a positive FB. The recommendation information generation unit 145 generates optimal output information based on the recommendation parameter, for example, based on preceding and subsequent contexts, situations, or the like, and recommends, for example, music or the like to the user. More specifically, the recommendation information generation unit 145 generates recommendation information as an output based on an analysis result by the analysis unit 130, various types of information (user's situation, characteristic information, environment information, content of user's instruction, and the like), and recommendation parameters.

In the present embodiment, as described above, voice information, the above-described various types of information (user's situation, characteristic information, environment information, content of user's instruction, and the like), and the like are used for semantic analysis or generation of recommendation information. Therefore, the machine learning technique capable of performing processing in consideration of a large number of conditions is suitable for processing that requires performing processing such as recommendation based on various conditions as in the present embodiment.

For example, it may be preferable for the user to play a song similar to a song that appears in a conversation of the user up to immediately before. At this time, for example, the recommendation parameter reflects content regarding a song that has appeared in the conversation of the user up to immediately before, and the recommendation information generation unit 145 can generate, based on the recommendation parameter, output information for causing a song similar to the song that the user has been talking about until immediately before to play.

Furthermore, in a case where a song is previously played to the user, it may be preferable for the user to play the song again after, for example, one week or more has elapsed since the song was played. At this time, for example, information regarding a previously recommended song is reflected in the recommendation parameter, and the recommendation information generation unit 145 can generate output information indicating that the song is recommended when one week or more has elapsed since the previously recommended song was played.

### <<2.2. Processing Example>>

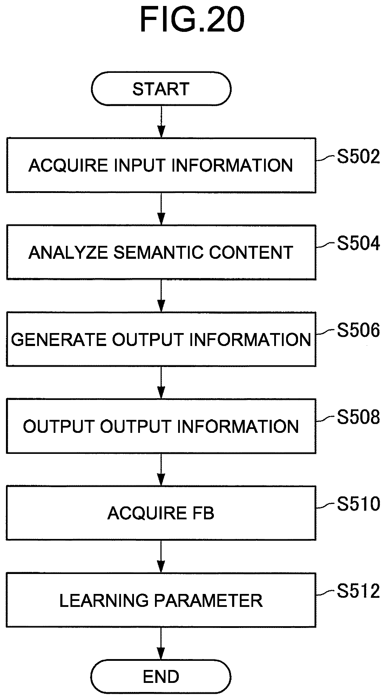

First, parameter update processing which is processing in which the information processing apparatus 11 updates the black box parameter (semantic analysis parameter and recommendation parameter) will be described with reference to FIG. 20. FIG. 20 is a flowchart illustrating an example of the parameter update processing according to the second embodiment. The parameter update processing will be described below with reference to FIG. 20.

First, the information processing apparatus 11 acquires input information (Step S502). The information processing apparatus 11 receives, for example, input information to the user terminal 20 via the network 30. The received input information is transmitted to the analysis unit 131 via the communication control unit 160.

Next, the analysis unit 131 analyzes the semantic content of the input information (Step S504). More specifically, the analysis unit 131 analyzes the semantic content of the input information based on the semantic analysis parameter stored in the storage unit 118. The analysis result is transmitted to the generation unit 143.

Next, the generation unit 143 generates output information (Step S506). More specifically, the recommendation information generation unit 145 generates output information for making various recommendations to the user based on the analysis result and the recommendation parameters stored in the storage unit 118. The output information is transmitted to the output control unit 150.

Next, the output control unit 150 outputs the output information (Step S508). More specifically, the output control unit 150 transmits the output information to the communication control unit 160. The output information is transmitted to, for example, the user terminal 20 connected to the network 30. As a result, the user terminal 20 outputs the output information. For example, the user terminal 20 outputs a voice that recommends a song to the user.

Next, the information processing apparatus 11 acquires the FB (Step S510). For example, the information processing apparatus 11 acquires a response to an output result from the user as an FB. The acquired FB is transmitted to the processing unit 128.

Next, the processing unit 128 learns the semantic analysis parameter and the recommendation parameter (Step S512). Specifically, the learning unit 125 learns the semantic analysis parameter and the recommendation parameter stored in the storage unit 118 based on the FB from the user. As a result, the semantic analysis parameter and the recommendation parameter are updated. When these parameters are updated, the parameter update processing ends.

The parameter update processing has been described above with reference to FIG. 19. In this manner, various parameters for the information processing apparatus 11 to generate the output information are updated based on the FB by the user or the like, for example, whereby the information processing apparatus 11 can generate the output information more desired by the user.

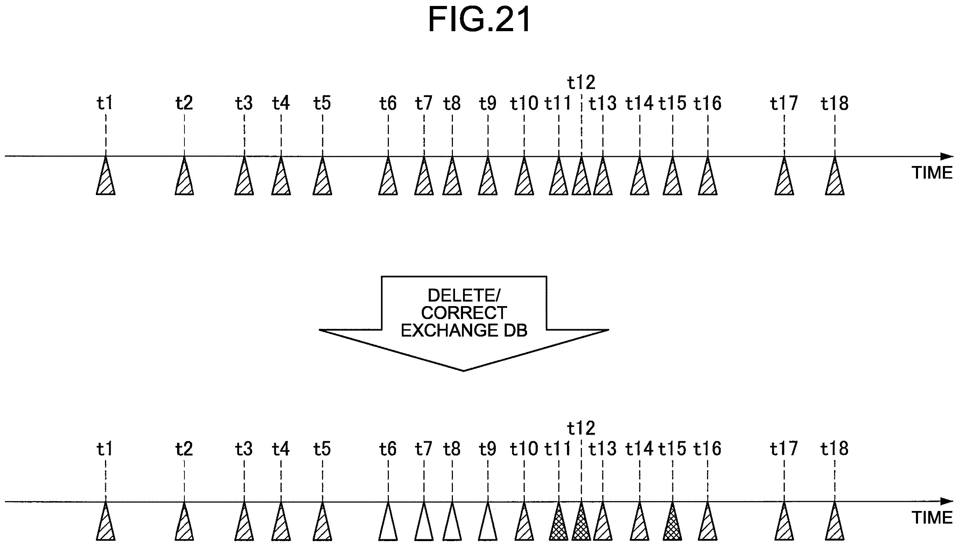

Next, an outline of processing that the information processing apparatus 11 according to the second embodiment causes an algorithm to relearn will be described with reference to FIG. 21. FIG. 21 is a diagram illustrating an outline of processing that the information processing apparatus 11 according to the second embodiment causes an algorithm to relearn.

In FIG. 21, on the upper side, a history of exchange between the user and the information processing apparatus 11 is illustrated with a horizontal axis as a time axis. More specifically, times (t1 to t18) at which the input information from the user is input to the information processing apparatus 11 and the output information for the input information is output are arranged on the time axis in the time series. A shaded triangular marker is illustrated at the time when the input information is input and the output information is output. The information processing apparatus 11 causes an algorithm to learn based on these exchanges.

Next, the processing in which the information processing apparatus 11 according to the second embodiment causes the algorithm to relearn will be described. Also in the second embodiment, similarly to the first embodiment, the exchange record recorded in the exchange DB is deleted or corrected. For example, the information regarding the exchange between the times t6 to t9 corresponding to the mark of the triangle with no hatching or grid is deleted from the exchange DB 113. Furthermore, the information regarding the exchange at the times t11, 12, and 15 corresponding to the mark of the triangle to which the grid is attached has been corrected. For example, the output information generated at these times is corrected. In addition, the exchange at the time corresponding to the shaded triangular mark remains as it is.

The processing unit 120 searches for an exchange to be deleted based on the exchange DB 113 and deletes the exchange. More specifically, the extraction unit 122 searches for the exchange (label information) recorded in the exchange DB 113 based on, for example, an input from the user. For example, the extraction unit 122 can search the exchange DB 113 for label information based on, for example, a keyword such as "Gunma" described above, and extract learning data based on the label information. The correction unit 124 deletes the retrieved learning data from the learning DB 114. Furthermore, the correction unit 124 may delete the searched label information and the like from the exchange DB 113.

Furthermore, the extraction unit 122 may extract, from the learning DB 114, learning data that is affected by derivative influence from the information regarding the exchange to be deleted. For example, in a case where learning data is deleted based on the keyword "Gunma", the extraction unit 122 may extract learning data corresponding to an event in which the output information changes before and after the deletion. The correction unit 124 may delete learning data regarding the event.

The event deleted in this manner corresponds to the exchange at times t6 to t9 illustrated in FIG. 21.

The correction unit 124 may correct the learning data without deleting the learning data. For example, as described with reference to FIG. 13, the correction unit 124 may correct the learning data based on the magnitude of change in the output information due to deletion of the learning data based on the keyword. The exchange corresponding to the corrected learning data corresponds to the exchange at the times t11, 12, and 15 illustrated in FIG. 21.

As described above, in the second embodiment, the parameter is learned based on exchange. Therefore, it is possible to relearn the parameter by correcting or deleting at least a portion of the exchange as described above. That is, it is possible to cause the algorithm to relearn by correcting or deleting at least a portion of the exchange. As a result, an algorithm excluding a specific influence can be created.

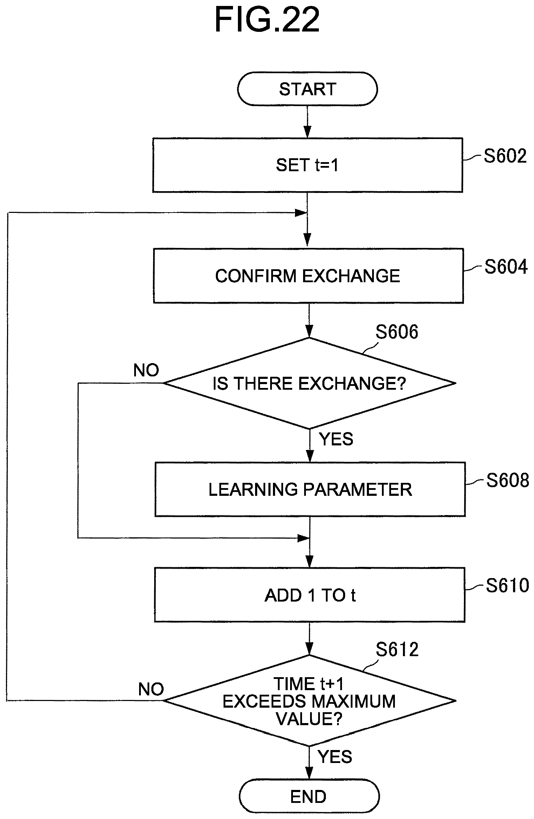

Next, processing that the information processing apparatus 11 according to the second embodiment causes parameters to relearn will be described with reference to FIG. 22. FIG. 22 is a flowchart illustrating the parameter relearning processing according to the second embodiment. Hereinafter, the parameter relearning processing according to the second embodiment will be described with reference to FIG. 22. Here, as illustrated in FIG. 21, it is assumed that the information regarding each exchange recorded in the exchange DB 113 is maintained, corrected, or deleted.

First, the determination unit 123 sets a value at a time t at which the exchange to be updated (deleted or corrected) is performed to 1 (Step S602). That is, the determination unit 123 sets the exchange to be updated to the oldest exchange.

Next, the determination unit 123 refers to the exchange DB 113 and confirms the exchange information corresponding to the set time (Step S604). When the exchange information corresponding to the time set in the exchange DB 113 exists (Step S606: Yes), the process proceeds to Step S608. On the other hand, in a case where the exchange information corresponding to the set time has been deleted (Step S606: No), the process proceeds to Step S610.

In a case where the exchange information corresponding to the set time exists in the exchange DB 113 (Step S606: Yes), the learning unit 125 learns the parameter in Step S608 (Step S610). More specifically, the learning unit 125 updates the parameter included in at least one of the analysis unit 131 or the generation unit 143 based on the information regarding the exchange until the time t.

Specifically, the learning unit 125 updates the semantic analysis parameter and the recommendation parameter. More specifically, the learning unit 125 causes the analysis unit 130 to generate a new semantic analysis parameter by optimizing the semantic analysis parameter based on relearning up to the time t-1 using the input information from the user, various types of information, and FB information for the analysis result at the set time t. Here, the FB information may be a direct FB (for example, FB of "good" or "bad") from the user or an implicit FB. Furthermore, the FB information may be a change in facial expression or biological information of the user. As a result, the semantic analysis parameter is updated.

Furthermore, the learning unit 125 causes the recommendation information generation unit 145 to generate a new recommendation parameter by optimizing a recommendation parameter based on relearning up to the time t-1 using the input information at the set time t, various types of information, the output recommendation information, and the FB information for the recommendation. As a result, the recommendation parameter is updated.

Next, the determination unit 123 adds 1 to the set time t to set a new time t+1 (Step S610). Next, the determination unit 123 determines whether the newly set time t+1 exceeds the maximum value (Step S612). Here, the maximum value at the time t+1 may be, for example, the number of exchanges recorded in the exchange DB. When it is determined that the time t+1 exceeds the maximum value (Step S612: Yes), the parameter relearning processing illustrated in FIG. 21 ends. Meanwhile, when it is determined that the time t+1 does not exceed the maximum value (Step S612: No), the process returns to Step S604.

Hereinbefore, the parameter relearning processing is described with reference to FIG. 22. In this manner, the parameters are sequentially relearned based on the past exchange information. As a result, the algorithm for the information processing apparatus 11 to generate the output information is relearned. In this way, the information processing apparatus 11 according to the second embodiment can realize a desired algorithm state.

### <3. Application Example>

Hereinafter, an application example of the information processing system 1 according to the present embodiment will be described.

### [Application Example to News Reading Function]

Relearning of an algorithm in a case where the information processing system 1 generates output information for the user terminal 20 or the like to output voice information regarding news or the like based on the algorithm will be described.

As a first example, an example in which the user moves, an address of the user changes (that is, the position information changes), and regionality of a living environment of the user changes will be described. In this case, a trigger for causing the information processing system 1 to perform relearning on the algorithm is not particularly limited, but the information processing system 1 may cause the algorithm to perform relearning based on, for example, explicit indication of the user (input of a change in address, or the like), detection of a change in attribute information (for example, constant position information of the user) based on global positioning system (GPS) information, or the like. In this case, as a result of relearning, the information processing system 1 can optimize specific recommendation contents starting from the changed address, such as contents related to the area concerned and contents related to commuting or school routes, while maintaining the tendency of recommendation based on the behavioral characteristics of the user.

As a second example, a case where the user leaves his/her home country to study abroad will be described. In this case, for example, the information processing system 1 can cause the algorithm to relearn so as to be able to generate output information regarding news corresponding to the place of studying abroad, based on a change in the address of the user or a change in the lifestyle from "work" to "student".

### [Application Example to Robotics]

An example in which the information processing system 1 according to an embodiment of the present disclosure is applied to various types of robotics will be described. For example, the information processing system 1 according to an embodiment of the present disclosure can be applied to an entertainment robot such as "AIBO" (registered trademark). For example, as the user moves, the information processing system 1 can cause the algorithm to relearn based on the information regarding a place.

For example, it is assumed that a pet robot has acquired a "habit regarding a place" as a result of learning, and specifically, the pet robot behaves as if it is a favorite place under the stairs in the floor plan of the house before moving. Thereafter, in a case where there is no staircase in the new residence where the user has moved, it is conceivable that the pet robot behaves to keep searching for a favorite place. At this time, the information processing system 1 can cause the algorithm to relearn and subsequently delete learning data regarding an old room layout (information regarding a place). As a result, the pet robot can forget only the behavior regarding the place while maintaining personality or a response to the user acquired as a result of the growth so far. At this time, the information processing system 1 can cause the pet robot to exhibit a behavior that naturally conforms to the new place by gradually deleting the learning data associated with the place of the moving source.

Next, an example in which the information processing system 1 of the present disclosure is applied to a guide robot of an airport, a shopping mall, or the like will be described. Here, the guide robot is a robot in which guidance of a place where the guide robot is arranged is optimized through interaction with a customer. Here, for example, in a case where a tenant in a floor is changed, the information processing system 1 may delete only information (for example, information regarding a product handled by the tenant, past interaction with a customer who is looking for the tenant, guidance including the tenant in a route, or the like) regarding the tenant from various databases and cause the algorithm to relearn. As a result, the guide robot can perform guidance suitable for a changed environment while maintaining habituation to the facility. For example, after the change of the tenant, even if the guide robot receives a customer's request for a product handled by the tenant before the change, the guide robot does not perform the guide in consideration of the tenant before the change that no longer exists.

Next, an example in which the information processing system 1 of the present disclosure is applied to an industrial robot will be described. In this case, when a specification of a target component flowing in a line, which is handled by the industrial robot, is changed, the information processing system 1 deletes a past history regarding the specification, and thus, even when a component with a new specification flows in the line, the information processing system 1 can cause the algorithm to relearn so that the industrial robot can quickly respond to the change.

### [Application Example to Other Industries]

Next, an application example of the information processing system 1 of the present disclosure to other industries will be described. The information processing system 1 of the present disclosure can also be applied to techniques such as automatic driving and driving navigation.

For example, a case where the information processing system 1 provides a driving navigation to the user will be described. In this case, the information processing system 1 can cause the algorithm to relearn as the user moves to another area or the map information is changed due to construction or the like. As a result, the information processing system 1 can perform a route recommendation or the like optimized for a new area or changed map information while maintaining tendency of the driving navigation corresponding to the user's driving preference, lifestyle, or the like.

Furthermore, the information processing system 1 may cause the algorithm to relearn in accordance with a change of a vehicle owner. As a result, the vehicle can perform a travel assistance, an autonomous travel control, or the like adapted to the preference of the new owner while eliminating the habit and preference of the owner before the change while leaving a learning result regarding a travel assistance control and a vehicle control based on the travel history and the vehicle control history until the relearning is performed. Such relearning is also suitable, for example, in a case where a registered user of a shared car shared in the same area changes. Here, the algorithm may be mounted on the vehicle or may be disposed on a network referred to by the vehicle.

Next, an example in which the information processing system 1 of the present disclosure is applied to an investment adviser AI will be described. Note that the investment adviser AI is an AI technique for giving advice regarding investment to the user. According to the information processing system 1 of the present disclosure, it is possible to dynamically delete the past learning data and cause the algorithm to perform relearning while the learning history is accumulated. Examples of the trigger for relearning of the algorithm include a change in a user's portfolio, a change in a user's investment policy, and a discovery (in addition, a fact to be relearned for the algorithm is found later) of a fraudulent case regarding a target brand.

### [Other Application Examples]

According to the information processing system 1 of the present disclosure, it is possible to cause an algorithm to relearn so that output information regarding various recommendations (for example, recommendation regarding the music described above, and the like) is not generated. More specifically, there is a case where the user does not want to remember a friend whom the user has come to dislike, and thus, the influence of music recommended by the friend is desired to be deleted from the algorithm. In this case, the information processing system 1 can cause the algorithm to relearn by adjusting (for example, delete) a degree of influence derived from learning data regarding the music recommended by the friend. As a result, the information processing system 1 does not output the information regarding the music recommended by the friend of the user as the output information based on the relearned algorithm. Furthermore, similarly, there is a case where the user does not want to remember a sport that the user has come to dislike, and thus, the user wants to delete the influence on the algorithm by recommendation of purchase of the sport. Also in this case, the information processing system 1 can cause the algorithm to relearn similarly to the case of deleting the influence of music.

The information processing system 1 can delete various types of information recorded in the exchange DB or the like. More specifically, the information processing system 1 can delete recorded information regarding a memo, a reminder, exchange (for example, daily conversation) between the information processing system 1 and the user terminal 20, and the like. For example, in a case where the user does not want to remember a friend who the user has come to dislike, the information processing system 1 can delete information regarding the friend. Furthermore, in a case where it is troublesome when the record of user's past girlfriend is seen by the current girlfriend, the information processing system 1 can delete the information regarding the past girlfriend. Furthermore, in a case where the user does not want to remember the information of the middle school, the information processing system 1 can delete the record of the middle school. Furthermore, in a case where the user does not want to remember information near the workplace, the information processing system 1 can delete a record near the workplace. In this way, by deleting information that is not convenient for the user, the information processing system 1 can generate more appropriate output information for the user.

### <4. Modification Example>

Hereinafter, modification examples of the information processing system of the present disclosure will be described.

### [Example of Automatically Obtaining Information by Web Crawling]

In the above embodiment, for example, the information such as the knowledge DB 111, the recommendation DB 112, or the exchange DB 113 is updated using the input information from the user and the output information for the input information. That is, the information processing apparatus 10 learns and relearns the algorithm based on the input information from the user and the output information from the information processing apparatus 10. Not limited to this, the information processing apparatus 10 according to the present embodiment may obtain information popular in the world by, for example, web crawling, and learn an algorithm based on the obtained information. That is, data regarding a trend in the world may be used as the learning data. As a result, the information processing apparatus 10 can realize the state of the algorithm that can generate the output information in accordance with the trend of the world.

At this time, in specifying the input/output information serving as the basis of learning for recommendation to the user or the like, the basis may be indirectly designated by the user's input as described later. Furthermore, as described later, the relearning may be automatically performed based on the web crawling or the user's behavior on the web.

For example, the information processing apparatus 10 may learn an algorithm based on attribute generalized information (for example, information such as "unmarried woman in 40s") of a type similar to the user. In this case, recommendation or the like to the user is performed based on not the user's own specific action or the like but the user's action or the like of the generalized attribute information. In this case, in a case where there is a change in the attribute information of the user (for example, a change from "unmarried woman in 40s" to "married woman in 50s"), the information processing apparatus 10 can perform relearning of the algorithm in accordance with the change.

Furthermore, the information processing apparatus 10 may cause an algorithm to learn by using a result of following (reference to a timeline or the like) of a social network service (SNS) by the user or the like. For example, according to a situation in which the user follows Mr. A, it is estimated that the user is interested in or empathizes with Mr. A. Therefore, the information processing apparatus 10 may cause, for example, an algorithm used for recommendation to learn based on behavior information and preference information of Mr. A based on information that the user follows Mr. A.

Alternatively, the information processing system 1 can cause learning of an algorithm according to information edited by the sender or the like based on designation of the user for a specific sender, a blogger, or a famous person on the SNS having influence. For example, the information processing system 1 causes an algorithm to learn based on information such as food or a place recommended by a famous person, so that recommendation of the food or the place is also made to the user.

As described above, the information processing system 1 can cause an algorithm to learn using information acquired based on web crawling or the like. At this time, in the information processing system 1, the technique according to the present disclosure may be used in a case where a follow situation of a user with respect to another sender or designation of a curator is changed. For example, in a case where the user unfollows Mr. A, it can be estimated that the user has lost interest or empathy with Mr. A. Therefore, by relearning the algorithm subsequently for the past learning result regarding Mr. A, it is possible to exclude only the content affected by Mr. A without greatly changing the recommendation tendency for the user. Alternatively, for example, in a case where the curator has committed a crime (for example, a popular idol and the like), information for correcting the algorithm may be transmitted to the information processing system 1. For example, the information processing system 1 may cause the algorithm to relearn such that output information associated with the curator is not generated.

In the relearning of the algorithm described above, the information stored in the exchange DB or the like is corrected, but the information before and after the correction may be stored in the exchange DB or the like. As a result, the information processing system 1 can subsequently use the information before correction. In addition, the information processing system 1 may store a part of the corrected or deleted information.

### [Relearning of Algorithm Triggered by Attribute Change of User]

The information processing system 1 according to an embodiment of the present disclosure may detect a change in the user's situation (behavior, preference situation, or the like) and delete the stored history according to a result of the detection. Note that, at this time, the information processing system 1 may make an inquiry about deletion of the history to the user, or may delete the history without making an inquiry to the user.

In a case where the history is deleted without making an inquiry about deletion to the user, the information processing apparatus 10 may return the deleted history to the original state when there is an inquiry from the user. At this time, the information processing apparatus 10 can store the history to be deleted for a certain period on the premise of recovery of the history. In addition, the information processing system 1 may perform stepwise deletion such as gradually repeating deletion of the history and repeating relearning of the algorithm. At this time, the information processing system 1 may delete information in order from the oldest information, or may delete information in order from the newest information.

In addition, the information processing system 1 may change the density of information as a whole regardless of the freshness of information in deleting the history in stages. That is, the information processing system 1 may perform deletion in stages so as to thin out various types of information in the history to be deleted regardless of freshness of information. Furthermore, the information processing system 1 may recommend a degree to which information should be deleted in stages to the user.

### [Example of Deleting History Without User's Permission]

The information processing system 1 may delete various types of information (for example, information regarding a learning history or past exchange) in the background without permission of the user (that is, confirmation is not performed on the user) according to the detected change in the user situation or the like.

The information processing system 1 may delete various types of information in response to a predetermined trigger. In this case, the information processing system 1 may unobtrusively only confirm to the user whether the event that triggers the deletion is correct.

### [Deletion of Use Environment Data in Actual Environment]

In the above embodiment, the processing is described in which the learning is performed after a product constituting the information processing system 1 is shipped and the learning result is relearned. However, even before shipment, it is possible to learn an algorithm by using simulation data assuming after the shipment. For example, learning of an algorithm using a persona (superficial personality) of a user assumed to use can be cited. In addition, there is learning of an algorithm assuming a use environment of a robot. After the learning of the algorithm is performed in this manner, the information processing system 1 can delete at least a portion of learning data accumulated before the shipment according to accumulation of learning data of a real environment after the shipment.

### [Subsequent Learning for Solving Problem from Ethical Viewpoint]

Here, an example in which the information processing system 1 causes the algorithm to relearn later in a case where output information output based on the algorithm is determined to be unfavorable from an ethical viewpoint will be described. For example, the information processing system 1 can extract information regarding past exchanges from an ethical viewpoint. For example, the information processing system 1 extracts information regarding the exchange that may lack fairness among the information regarding the past exchanges. Specifically, the information processing system 1 may set a flag based on a keyword that may cause a problem from the viewpoint of discrimination or compliance with respect to race or gender, religious or cultural custom, regional custom, or the like. As a result, the information processing system 1 can perform processing such as determination as to whether the flagged information can actually cause a problem from an ethical viewpoint, and deletion of information regarding the exchange.

Next, the information processing system 1 relearns the algorithm based on the determination result of the ethical viewpoint. Two examples of relearning of an algorithm based on the ethical viewpoint are introduced. A first example is an example of relearning of an algorithm in a case where an ethical problem or an incident occurs in society. For example, in a case where a usage of a certain term or recognition that a specific event includes differential nuances is configured in society due to a statement of a person having social influence or the like, it is not preferable for the algorithm to continue information presentation without considering the usage or event. Therefore, the information processing system 1 can be caused to relearn the algorithm so as to match the values after the case. Here, the relearning of the algorithm may be performed in the form of distribution of a correction program to the terminal system used by the user. Here, in relearning of the algorithm, after sorting of information based on the exchange DB is performed, relearning of the algorithm is performed. As a result, the algorithm can avoid performing a motion that has been recognized by the society as being differential while maintaining a motion tendency in recommendation, information presentation, and the like. At this time, the user may be able to reject relearning of the algorithm. In a case where the user refuses to relearn the algorithm, the information processing system 1 may cause, for example, the user terminal 20 to present a message indicating that the user is responsible for the subsequent behavior of the AI agent.

In the second example, when the AI agent is operated across borders or regions after shipment, the algorithm is relearned. For example, a case where the user migrates from Japan to a foreign country together with the information processing system owned by the user, or a case where the business equipment is moved between bases across the culture areas is assumed. At this time, the information processing system 1 can cause the algorithm to relearn so as to conform to the exchange that matches the culture and custom of the area after the migration or the movement. The relearning of the algorithm may be performed based on an operation by the user. Depending on the region or the target industry, there may be prepared an option of setting so as to conform to the standard adopted in the region or the target industry. That is, the information processing system 1 may cause the algorithm to be relearned such that the output information output based on the relearned algorithm conforms to the standard adopted in the region or the target industry. As a result, the algorithm can prevent appearance of behavior that does not match the culture and custom of the new region in the region before movement while maintaining the tendency of the operation so far.

As described above, in a case where the output information output based on the information processing system 1 has an unethically output (for example, utterance or the like), the information processing system 1 can more easily cause the algorithm to relearn based on an ethical viewpoint or the like. In addition, relearning of the algorithm based on the ethical viewpoint facilitates use across regions or culture areas of the user, and deployment of business equipment and the like between regions.

### [Relearning of Algorithm When Predetermined Period Has Elapsed]

Furthermore, the information processing system 1 may cause the algorithm to relearn according to a period elapsed from a predetermined period. For example, the learning data may include data that requires processing regarding rights such as copyright. More specifically, for example, in a case where the permission deadline of the copyright or the like of the data included in the learning data has expired, the information processing system 1 can remove the influence on the learning result (that is, the algorithm generated based on the learning) by deleting the learning history regarding the data. Such processing may be performed in a case where a right holder such as a copyright performs such processing.

Furthermore, the information processing system 1 may cause the algorithm to relearn by deleting information such as the exchange DB after a trial period (trial employment period) of the algorithm ends. More specifically, for the AI character or the like, after the free trial period ends, the information processing system 1 may delete data regarding exchange or the like during the trial period and cause the algorithm to perform relearning.

As described above, the information processing system 1 causes the algorithm to relearn in accordance with the period that has elapsed from the predetermined period, and thus, for example, a provider who provides the algorithm can cause the algorithm to relearn at a desired timing.

### [Warning To User]

When deleting information such as the exchange DB, the information processing system 1 may warn the user in a case where the deletion has a large influence on the algorithm. For example, there is a case where an influence on an algorithm is large when information regarding a specific person in a group including a plurality of persons is to be deleted. In an extreme case, it is conceivable that the influence on the algorithm of the group is deleted by deleting the information of the one person.

Furthermore, in a case where there is a possibility that there is data that should not disappear when deleting the information of the one person, the information processing system 1 may warn the user of the possibility. This is because there is a case where an exchange that should not disappear disappears in view of the current hobby and taste when information regarding one person in the group is to be deleted.

Furthermore, for example, in a case where there is a request "please erase the history of Gunma." from the user, the information processing system 1 may check the interpretation of the meaning of the request. This is to prevent the user from unintentionally relearning due to erroneous recognition of the word as another meaning when the word as a deletion candidate is ambiguous. For example, information for confirming the interpretation of the meaning of "Gunma means your friend XXX, right?" may be output to the user. As a result, it is possible to confirm that it is not the deletion of the information regarding the Gunma as the place name. Furthermore, for the user, confirmation that "if delete (the history of Gunma), is it okay like YYY?" or preliminary visualization of the influence in a case where relearning is performed may be performed. Note that the confirmation may be performed by voice or screen display. Furthermore, it may be displayed on a display present around the user. As a result, the user can select whether or not to delete the history according to the confirmation result.

### [Cooperation with Other Information Processing Systems]

The information processing system 1 according to the present embodiment may delete information stored in another information processing system (for example, a system using an AI technique) or the like. In this case, the information processing system 1 informs another information processing system of data regarding the exchange to be deleted. Similarly to the processing in the information processing system 1 according to the present embodiment, the other information processing system can delete information from the exchange DB or the like, correct inconsistency of output information based on the deletion, or the like.

### [Information Processing System Including Plurality of Devices]

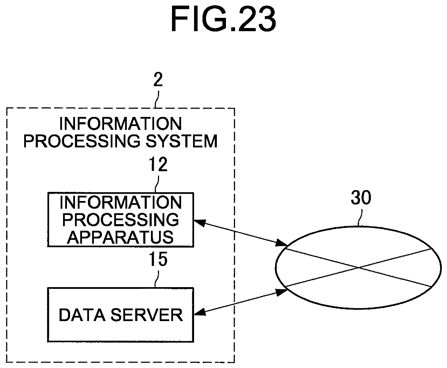

In the first and second embodiments, the information processing apparatus 10 or 11 constitutes an information processing system. The present invention is not limited thereto, and the information processing system may include a plurality of devices. FIG. 23 is a diagram illustrating an example of an information processing system 2 including a plurality of devices. As illustrated in FIG. 23, the information processing system 2 includes an information processing apparatus 12 and a data server 15. Furthermore, the information processing apparatus 12 and the data server 15 are connected via a network 30.

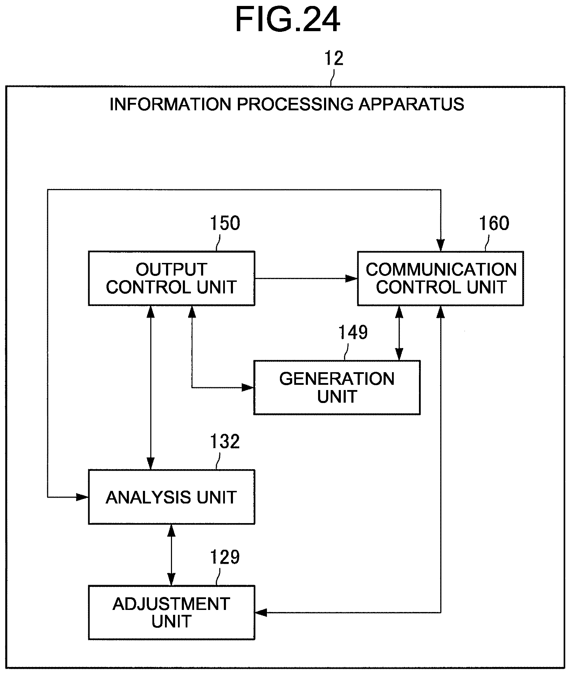

A configuration of the information processing apparatus 12 will be described with reference to FIG. 24.

FIG. 24 is a functional block diagram illustrating the configuration of the information processing apparatus 12. Unlike the information processing apparatuses 10 and 11 according to the first and second embodiments, the information processing apparatus 12 illustrated in FIG. 24 does not include a database corresponding to a knowledge DB, a recommendation DB, an exchange DB, a learning DB, or the like. These databases are recorded in the data server 15. In this case, the information processing apparatus 12 can acquire information from a data server connected to the network as necessary, and cause an algorithm to relearn or the like. Note that, although not illustrated in FIG. 24, the information processing apparatus 12 includes a storage unit that stores information necessary for various types of processing.

### <5. Hardware Configuration>

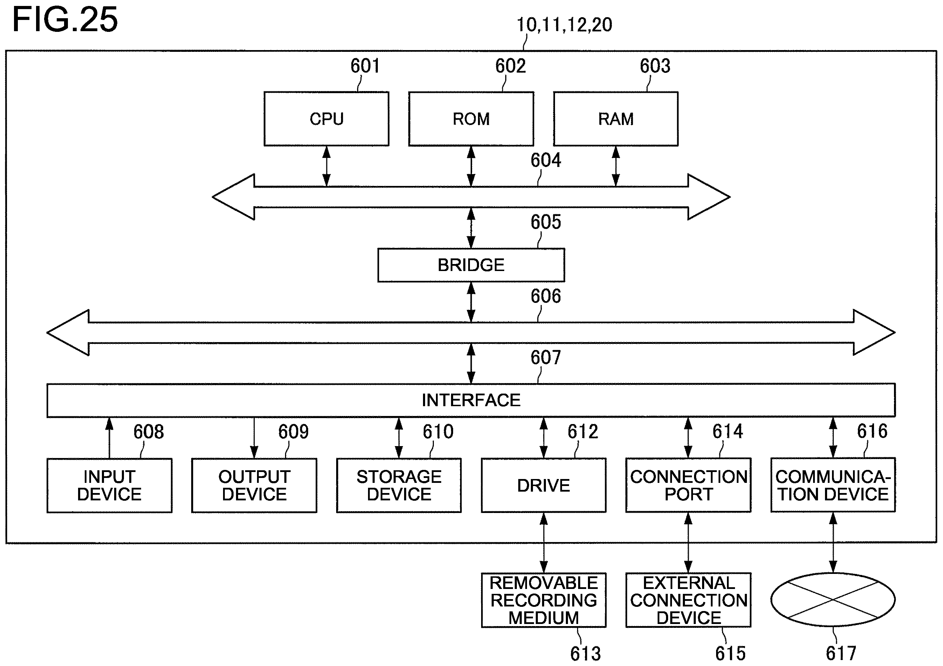

Next, an example of a hardware configuration of the information processing apparatuses 10, 11, and 12 constituting the information processing system 1, or the user terminal 20 according to an embodiment of the present disclosure will be described in detail with reference to FIG. 25. FIG. 25 is a functional block diagram illustrating a configuration example of a hardware configuration of the user terminal 20, or the information processing apparatuses 10, 11, and 12 constituting the information processing system 1 according to an embodiment of the present disclosure.

The information processing apparatus 10 constituting the information processing system 1 according to the present embodiment mainly includes a CPU 601, a ROM 602, and a RAM 603. Furthermore, the information processing apparatus 10 further includes a host bus 604, a bridge 605, an external bus 606, an interface 607, an input device 608, an output device 609, a storage device 610, a drive 612, a connection port 614, and a communication device 616.

The CPU 601 functions as an arithmetic processing device and a control device, and controls the overall operation or a part of the operation in the information processing apparatus 10 according to various programs recorded in the ROM 602, the RAM 603, the storage device 610, or a removable recording medium 613. The ROM 602 stores programs, operation parameters, and the like used by the CPU 601. The RAM 603 primarily stores programs used by the CPU 601, parameters that appropriately change in execution of the programs, and the like. These are mutually connected by the host bus 604 including an internal bus such as a CPU bus. For example, the processing unit 120, the analysis unit 130, the generation unit 140, the output control unit 150, and the communication control unit 160 illustrated in FIG. 3 can be configured by the CPU 601.

The host bus 604 is connected to the external bus 606 such as a peripheral component interconnect/interface (PCI) bus via the bridge 605. In addition, the input device 608, the output device 609, the storage device 610, the drive 612, the connection port 614, and the communication device 616 are connected to the external bus 606 via the interface 607.

The input device 608 is an operation means operated by the user, such as a mouse, a keyboard, a touch panel, a button, a switch, a lever, and a pedal. Furthermore, the input device 608 may be, for example, a remote control means (so-called remote controller) using infrared rays or other radio waves, or an external connection device 615 such as a mobile phone or a PDA corresponding to the operation of the information processing apparatus 10. Furthermore, the input device 608 includes, for example, an input control circuit that generates an input signal based on information input by the user using the above-described operation means and outputs the input signal to the CPU 601. By operating the input device 608, the information processing apparatus 10, 11, or 12 or the user of the user terminal 20 can input various data or give an instruction on processing operation to the information processing apparatus 10, 11, or 12 or the user terminal 20.

The output device 609 includes a device capable of visually or aurally notifying the user of the acquired information. Examples of the device include a display device such as a CRT display device, a liquid crystal display device, a plasma display device, an EL display device, and a lamp, an audio output device such as a speaker and a headphone, and a printer device. The output device 609 outputs, for example, results obtained by various types of processing performed by the information processing apparatus 10, 11, or 12 or the user terminal 20. Specifically, the display device displays results obtained by various types of processing performed by the information processing apparatuses 10, 11, and 12 or the user terminal 20 as text or images. Meanwhile, the audio output device converts an audio signal including reproduced audio data, acoustic data, or the like into an analog signal and outputs the analog signal.

The storage device 610 is a data storage device configured as an example of a storage unit of the information processing apparatus 10. The storage device 610 includes, for example, a magnetic storage unit device such as a hard disk drive (HDD), a semiconductor storage device, an optical storage device, a magneto-optical storage device, or the like. The storage device 610 stores programs executed by the CPU 601, various data, and the like. For example, the storage unit 110 illustrated in FIG. 3 can be configured by the storage device 610.

The drive 612 is a reader/writer for a recording medium, and is built in or externally attached to the information processing apparatus 10. The drive 612 reads information recorded on the mounted removable recording medium 613 such as a magnetic disk, an optical disk, a magneto-optical disk, or a semiconductor memory, and outputs the information to the RAM 603. Furthermore, the drive 612 can also write a record on the mounted removable recording medium 613 such as a magnetic disk, an optical disk, a magneto-optical disk, or a semiconductor memory. The removable recording medium 613 is, for example, a DVD medium, an HD-DVD medium, a Blu-ray (registered trademark) medium, or the like. Furthermore, the removable recording medium 613 may be a CompactFlash (CF) (registered trademark), a flash memory, a secure digital (SD) memory card, or the like. Furthermore, the removable recording medium 613 may be, for example, an integrated circuit (IC) card on which a non-contact IC chip is mounted, an electronic device, or the like.

The connection port 614 is a port for directly connecting to the information processing apparatus 10, 11, or 12 or the user terminal 20. Examples of the connection port 614 include a universal serial bus (USB) port, an IEEE 1394 port, a small computer system interface (SCSI) port, and the like. Other examples of the connection port 614 include an RS-232C port, an optical audio terminal, a highdefinition multimedia interface (HDMI) (registered trademark) port, and the like. By connecting the external connection device 615 to the connection port 614, the information processing apparatus 10 directly acquires various data from the external connection device 615 or provides various data to the external connection device 615.

The communication device 616 is, for example, a communication interface including a communication device or the like for connecting to a communication network (network) 917. The communication device 616 is, for example, a communication card or the like for wired or wireless local area network (LAN), Bluetooth (registered trademark), or wireless USB (WUSB). Furthermore, the communication device 616 may be a router for optical communication, a router for asymmetric digital subscriber line (ADSL), a modem for various communications, or the like. For example, the communication device 616 can transmit and receive signals and the like to and from the Internet and other communication devices according to a predetermined protocol such as TCP/IP. Furthermore, the communication network 617 connected to the communication device 616 includes a network or the like connected in a wired or wireless manner, and may be, for example, the Internet, a home LAN, infrared communication, radio wave communication, satellite communication, or the like.

Hereinbefore, the example of the hardware configuration capable of realizing the functions of the user terminal 20, or the information processing apparatuses 10, 11, and 12 constituting the information processing system 1 according to the embodiment of the present disclosure is described. Each of the above-described components may be configured using a general-purpose member, or may be configured by hardware specialized for the function of each component. Therefore, it is possible to appropriately change the hardware configuration to be used according to the technical level at the time of carrying out the present embodiment. Note that, although not illustrated in FIG. 15, various configurations corresponding to the user terminal 20, or the information processing apparatuses 10, 11, and 12 constituting the information processing system 1 are naturally included.

Note that a computer program for realizing each function of the information processing apparatuses 10, 11, and 12 constituting the information processing system 1 according to the present embodiment as described above can be created and mounted on a personal computer or the like. Furthermore, a computer-readable recording medium storing such a computer program can also be provided. The recording medium is, for example, a magnetic disk, an optical disk, a magneto-optical disk, a flash memory, or the like. Furthermore, the computer program described above may be distributed via, for example, a network without using a recording medium. Furthermore, the number of computers that execute the computer program is not particularly limited. For example, a plurality of computers (for example, a plurality of servers and the like) may execute the computer program in cooperation with each other.

### <6. Supplement>

Hereinbefore, although the preferred embodiments of the present disclosure are described in detail with reference to the accompanying drawings, a technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

For example, in the above embodiments, the information processing system 1 deletes various types of information from both the knowledge DB 111 and the recommendation DB 112, but the present technique is not limited to such an example. For example, the information processing system 1 may delete various types of information from either the knowledge DB 111 or the recommendation DB 112.

Further, a method of designating information whose influence is desired to be deleted or reduced may be a time unit (in seconds, minutes, hours, days, months, or years). The designation method may be a place (place name or map region). In a case where the designation target is a map region, the user may designate the map region by, for example, tracing a map displayed on the user terminal 20. The designated target may be an individual or a group.

In addition, the information processing system 1 may generate output information for displaying which exchange is deleted or corrected in a list. The user can recognize which exchange is deleted or corrected by the output based on the output information.

Furthermore, the information processing system 1 may generate output information for causing the user to select a level at which exchange is deleted or corrected. For example, on the user terminal 20, information regarding a representative of the exchange to be deleted or corrected at each level is displayed as an image based on the output information. Furthermore, the user can select whether or not to delete or correct the information regarding the exchange based on the image display.

Furthermore, the information processing system 1 may cause the user to try the algorithm relearned by deleting or correcting the exchange. At this time, the information processing system 1 holds the exchange DB before the exchange is deleted or corrected, and can return to the algorithm before the exchange is deleted or corrected as necessary.

Furthermore, the information processing system 1 may correct the details of the exchange. The correction may be performed by a user operation or automatically performed by the information processing system 1.

Furthermore, in the above embodiment, the learning data is deleted or corrected in order to cause the algorithm to relearn. The present invention is not limited thereto, and new learning data may be added as necessary in order to cause the algorithm to relearn.

Furthermore, in the second embodiment, for example, various machine learning techniques using a neural network such as a recurrent neural network (RNN) or a convolutional neural network (CNN) may be used.

In addition, for example, it is assumed that there is a product on which a database such as the knowledge DB 111 is mounted. The information recorded in the database at the shipment stage of the product may be protected so as not to be deleted. For example, the database may be used for an application that cannot be uninstalled (for example, software used in a mobile terminal or the like). Furthermore, specific information among the information recorded in the knowledge DB 111 may be protected so as not to be deleted by designation of the user. Furthermore, the information processing system 1 may set the exchange information recorded in the exchange DB 113 to be protected according to the flow of exchange or the like.

In addition, the steps illustrated in the flowcharts of the above embodiments include not only processing performed in time series according to the described order, but also processing executed in parallel or individually without necessarily being processed in time series. Furthermore, it goes without saying that the order can be appropriately changed in some cases even in the steps processed in time series.

Furthermore, the effects described in the present specification are merely illustrative or exemplary, and are not restrictive. That is, the technique according to the present disclosure can exhibit other effects obvious to those skilled in the art from the description of the present specification together with or instead of the above effects.

Note that the following configurations also belong to the technical scope of the present disclosure.
(1) An information processing system,
   wherein for an algorithm that changes based on accumulation of learning data, a degree of influence derived from specific learning data in the accumulated learning data is adjusted, and relearning is performed based on new learning data obtained after the adjustment.
(2) The information processing system according to (1),
   wherein the learning data is based on data accumulated under a use environment of the algorithm.
(3) The information processing system according to (2),
   wherein the learning data includes data regarding output information from the algorithm based on input information of a user to the algorithm.
(4) The information processing system according to (3),
   wherein a specific learning history matching a predetermined condition is extracted from among learning histories of the algorithm based on a database in which data regarding the input information is recorded.
(5) The information processing system according to (4),
   wherein the degree of influence derived from the learning data corresponding to the specific learning history is adjusted.
(6) The information processing system according to any one of (1) to (5),
   wherein the degree of influence is adjusted by deleting or correcting the specific learning data.
(7) The information processing system according to any one of (1) to (6),
   wherein the degree of influence is a degree of influence on output information based on the algorithm.
(8) The information processing system according to (7),
   wherein the degree of influence is adjusted according to a change in the output from an output obtained before the change, the change occurring when the specific learning data is changed.
(9) The information processing system according to any one of (1) to (8),
   wherein the specific learning data is designated by a user.
(10) The information processing system according to any one of (1) to (10),
   wherein the specific learning data includes user data that is data regarding a user.
(11) The information processing system according to (10),
   wherein the user data includes position information regarding a position of the user.
(12) The information processing system according to (10) or (11),
   wherein the user data includes preference information regarding a preference of the user.
(13) The information processing system according to any one of (10) to (12),
   wherein the algorithm is relearned according to a change in the user data.
(14) The information processing system according to any one of (1) to (13),
   wherein the specific learning data includes data regarding a trend.
(15) The information processing system according to any one of (1) to (14),
   wherein the learning data includes data regarding ethics.
(16) The information processing system according to any one of (1) to (15),
   wherein the algorithm is relearned in accordance with a period elapsed from a predetermined period.
(17) The information processing system according to any one of (1) to (16),
   wherein information regarding a content of the relearning is output to a user.
(18) An information processing method,
   wherein for an algorithm that changes based on accumulation of a learning data, a processor adjusts a degree of influence derived from specific learning data in the accumulated learning data and performs relearning based on new learning data obtained after the adjustment.

### Reference Signs List

1, 2 INFORMATION PROCESSING SYSTEM
10, 11, 12 INFORMATION PROCESSING APPARATUS
110 STORAGE UNIT
111, 116 KNOWLEDGE DB
112, 117 RECOMMENDATION DB
113 EXCHANGE DB
114 LEARNING DB
120, 128 PROCESSING UNIT
121 UPDATE UNIT
122 EXTRACTION UNIT
123 DETERMINATION UNIT
124 CORRECTION UNIT
125 LEARNING UNIT
130, 131, 132 ANALYSIS UNIT
140, 143, 149 GENERATION UNIT
141, 144 CONFIRMATION INFORMATION GENERATION UNIT
142, 145 RECOMMENDATION INFORMATION GENERATION UNIT
150 OUTPUT CONTROL UNIT
160 COMMUNICATION CONTROL UNIT
15 DATA SERVER
20 USER TERMINAL
210 COMMUNICATION CONTROL UNIT
220 OUTPUT CONTROL UNIT
30 NETWORK

## Claims

1. An information processing system,
wherein for an algorithm that changes based on accumulation of learning data, a degree of influence derived from specific learning data in the accumulated learning data is adjusted, and relearning is performed based on new learning data obtained after the adjustment.

2. The information processing system according to claim 1,
wherein the learning data is based on data accumulated under a use environment of the algorithm.

3. The information processing system according to claim 2,
wherein the learning data includes data regarding output information from the algorithm based on input information of a user to the algorithm.

4. The information processing system according to claim 3,
wherein a specific learning history matching a predetermined condition is extracted from among learning histories of the algorithm based on a database in which data regarding the input information is recorded.

5. The information processing system according to claim 4,
wherein the degree of influence derived from the learning data corresponding to the specific learning history is adjusted.

6. The information processing system according to claim 1,
wherein the degree of influence is adjusted by deleting or correcting the specific learning data.

7. The information processing system according to claim 1,
wherein the degree of influence is a degree of influence on output information based on the algorithm.

8. The information processing system according to claim 7,
wherein the degree of influence is adjusted according to a change in the output from an output obtained before the change, the change occurring when the specific learning data is changed.

9. The information processing system according to claim 1,
wherein the specific learning data is designated by a user.

10. The information processing system according to claim 1,
wherein the specific learning data includes user data that is data regarding a user.

11. The information processing system according to claim 10,
wherein the user data includes position information regarding a position of the user.

12. The information processing system according to claim 10,
wherein the user data includes preference information regarding a preference of the user.

13. The information processing system according to claim 10,
wherein the algorithm is relearned according to a change in the user data.

14. The information processing system according to claim 1,
wherein the specific learning data includes data regarding a trend.

15. The information processing system according to claim 1,
wherein the learning data includes data regarding ethics.

16. The information processing system according to claim 1,
wherein the algorithm is relearned in accordance with a period elapsed from a predetermined period.

17. The information processing system according to claim 1,
wherein information regarding a content of the relearning is output to a user.

18. An information processing method,
wherein for an algorithm that changes based on accumulation of a learning data, a processor adjusts a degree of influence derived from specific learning data in the accumulated learning data and performs relearning based on new learning data obtained after the adjustment.
